# EUROPÄISCHE PATENTSCHRIFT

(11) **EP 2 640 776 B1**
(45) Veröffentlichungstag und Bekanntmachung des Hinweises auf die Patenterteilung: **08.01.2020**
(21) Anmeldenummer: 11785654.2
(22) Anmeldetag: 16.11.2011
(51) Int. Cl.: C08K 5/00

(54) **POLYAMIDZUSAMMENSETZUNGEN MIT VERBESSERTEN THERMOOXIDATIVEN, ANTIBAKTERIELLEN, LICHT- ODER ENERGIEAKTIVEN EIGENSCHAFTEN SOWIE VERFAHREN ZU DEREN HERSTELLUNG**
POLYAMIDE COMPOSITIONS WITH IMPROVED THERMO-OXIDATIVE, ANTI-BACTERIAL, LIGHT- OR ENERGY ACTIVE PROPERTIES AND METHOD FOR PRODUCING SAME
COMPOSITIONS POLYAMIDE PRÉSENTANT DE MEILLEURES PROPRIÉTÉS THERMO-OXYDATIVES, ANTIBACTÉRIENNES, D'ACTIVATION DE LUMIÈRE OU D'ÉNERGIE, ET LEURS PROCÉDÉS DE PRODUCTION

(30) Priorität: 16.11.2010 DE 102010051310
(43) Veröffentlichungstag der Anmeldung: 25.09.2013
(73) Patentinhaber: Thüringisches Institut Für Textil- Und Kunststoff- Forschung E.V., 07407 Rudolstadt (DE)
(72) Erfinder: STRUBL, Rüdiger, 07318 Saalfeld (DE); HEINEMANN, Klaus, 07407 Rudolstadt (DE)
(74) Vertreter: Plate, Jürgen
(86) Internationale Anmeldenummer: PCT/EP2011/070279
(87) Internationale Veröffentlichungsnummer: WO 2012/066051

(56) Entgegenhaltungen:
- EP-A1- 0 610 155
- US-A- 3 639 335
- US-A- 4 486 326

## Beschreibung

Die Erfindung betrifft ein Verfahren zur Herstellung von stabilisierten und/oder funktionalisierten, aus der Schmelze verformbaren Polyamidformmassen, bei denen durch Einsatz spezieller Metallsalz-Organoligand-Komplexverbindungen eine Stabilisierung und/oder spezielle Funktionalisierung erreicht wird. Die Stabilisierung betrifft die Verbesserung der thermooxidativen Eigenschaften gegen Wärmeeinwirkung, die Funktionalisierung kann antibakterielle, lichtabsorbierende oder energieaktive Eigenschaften umfassen. Die Stabilisierung und/oder Funktionalisierung wird durch Anwesenheit von Metallsalz-Organoligand-Komplexverbindungen als Polymeradditiv erreicht. Die Metallsalz-Organoligand-Komplexverbindungen bestehen aus einer Kombination eines Metallsalzes mit einer heterozyklischen organischen Verbindung, die als Ligand gegenüber dem Metallion auftritt und zu einer stöchiometrisch aufgebauten, thermisch stabilen Komplexverbindung führt. Die neuen Stabilisatoren oder funktionellen Additive sind gleichzeitig halogenarm.

Polyamide zählen im Bereich der technischen Thermoplaste zu einer bedeutenden Gruppe polymerer Werkstoffe. Als wichtiger Konstruktionswerkstoff werden Polyamide neben dem textilen Anwendungsbereich im Automobilbau und in der Elektrotechnik eingesetzt, wo zunehmend die Forderung nach Stabilität gegen Wärmeeinwirkung gestellt wird.

Die vorliegende Erfindung betrifft stabilisierte und/oder funktionalisierte Polyamidzusammensetzungen mit erhöhter Wärmestabilität und/oder funktionellen Eigenschaften. Die Polyamidzusammensetzung enthält zur Stabilisierung und/oder Funktionalisierung mindestens eine stabilisierende und/oder funktionalisierende Metallsalz-Organoligand-Komplexverbindung als Polymeradditiv. Der Organoligand ist ein 2-Oxazolinderivat. Das Metallsalz ist ein Kupfer(I)- oder Kupfer(II)-acetat oder ein Zink(II)-, Zinn(II)-, Cobalt-Molybdän-, Titan-, Silber(I)-, halogenid, nitrat, phosphat oder acetat.
Polymere werden durch Einwirkung von Wärme, Licht und Sauerstoff durch thermooxidative Prozesse abgebaut. Diese Polymerdegradationsvorgänge beruhen auf chemischen Reaktionen, bei denen Polymerketten nach unterschiedlichen Mechanismen gespalten werden. Die Folge sind nachteilige Änderungen der makroskopischen und physikalischen Eigenschaften der Polymere, die letztlich zu erheblichen Schädigungen bis hin zur Unbrauchbarkeit der Werkstoffe führen. Um diesen Degradationsprozessen entgegenzuwirken ist der Einsatz hochwirksamer Stabilisatoren unabdingbar. Durch Zusatz spezifisch wirksamer Additivsysteme zu den Polymeren können diese Prozesse über lange Zeiträume, d.h. über den gesamten Gebrauchszyklus von polymeren Fertigteilen, verzögert werden.
In der EP 0 610 155 A und in der US 3 639 335 sind Polyamidzusammensetzungen offenbart, die gegen die Einwirkung von Sonnenlicht und Hitze stabilisiert sind. Als Stabilisator enthalten sie das Reaktionsprodukt aus mindestens einem Kupfersalz und mindestens einem organischen metallkomplexierenden Mittel. Kupfer-Komplexe sind auch in der US 4 486 326 beschrieben.
Für die Stabilisierung von Polyamiden werden aus einer breiten Produktpalette verschiedenste chemische Substanzen zugesetzt, die Oxidationsprozesse der Polymeren minimieren oder zeitlich hinausschieben. Diese sogenannten Antioxidantien sind meistens aus sterisch gehinderten Phenolen, sekundären aromatischen Aminen oder Phosphorderivaten oder Thioethern aufgebaut. Neben diesen Substanzen gibt es für Polyamide besonders wirkungsvolle Stabilisatoren aus der Stoffklasse spezieller Kupferverbindungen, sogenannter Kupferstabilisatoren.

Kupferstabilisatoren sind zur Stabilisierung von Polyamiden seit einiger Zeit bekannt und werden gegenwärtig intensiv weiterentwickelt [DE19847627; DE4305166]. Der Einsatz derartiger Stabilisatorsysteme zielt darauf ab, eine Langzeitstabilisierung von Polyamiden bei erhöhten Temperaturen von bis zu 180 C zu erreichen. Kupferstabilisatoren werden beispielsweise bei der Polyamidfaserproduktion für Reifencord sowie für Spritzgussteile in technischen Anwendungen im Automotivebereich und in der Elektroindustrie als Leiterplattenträger eingesetzt. Kupferstabilisatoren bestehen in der Regel aus einem Gemisch von zwei Komponenten, basierend auf Kupferverbindungen und Halogensalzen. Eine Komponente besteht aus Kupferhalogeniden oder anderen Kupfersalzen wie Kupferacetat, Kupferstearat und Kupfersulfat. Damit diese Verbindungen als Antioxidantien wirksam sind, müssen als weitere Komponente Halogenverbindungen, und zwar in großem Überschuss, zugegeben werden. Verwendet werden meist Alkalijodide und -bromide, wobei die zugesetzte Menge einen bis zu 15-fachen molaren Überschuss an Halogen bezogen auf Kupfer betragen muss. Zur Stabilisierung von Polyamid werden bis zu 200 ppm Kupfer in der Stabilisatorzusammensetzung eingesetzt, was einem adäquaten Eintrag von bis zu 3000 ppm des jeweiligen Halogens in das Polymere erfordert. Mit derartigen Stabilisatorsystemen können Polyamide ausreichend wärmestabilisiert werden, sodass diese Polymere kurzzeitig Temperaturen von 150 bis 180 °C ausgesetzt werden können ohne dramatischen Verlust ihrer mechanischen Eigenschaften.
Jedoch weisen diese Kupferstabilisatoren im Gebrauch entscheidende Nachteile auf. Da Polyamide im konditionierten Zustand bis zu 3 Masse-% Wasser aufnehmen, migrieren wasserlösliche Bestandteile aus der Polymermatrix an die Oberfläche, was zu Belagsbildungen führt. Werden Kupferstabilisatoren in der beschriebenen Zusammensetzung mit dem notwendigerweise hohen Überschuss an Halogensalzen verwendet, bilden diese infolge Extraktionsprozessen einen hygroskopischen, meist sauren Belag auf der Polyamidoberfläche, was sich nachteilig bei Anwendungen für elektrische Bauteile auswirkt. Die Kriechstrombeständigkeit wird bis zum Versagen beeinträchtigt. Darüber hinaus kann es an Kontaktstellen mit Metallen zu Korrosion kommen. Auflagen der Automobil- und Elektronikindustrie lassen sich dadurch nur schwer einhalten.
Ein weiterer Nachteil dieser Stabilisatorsysteme besteht in der Reagglomerationsneigung dieser Verbindungen im Verarbeitungsprozess. Um diese Vorgänge zu reduzieren ist es erforderlich, einerseits auf eine Feinstverteilung der Stabilisatoren bei Zumischung zu den Polymeren zu achten, andererseits versucht man durch Herstellung von Masterbatches Probleme der Dosierbarkeit zu überwinden. Werden Kupfersalz/Halogensalz-Stabilisatoren als wässerige Lösung während der Polymerisation zugegeben, kommt es zudem zu Ablagerungen an Kesseln oder beim Faserherstellungsprozess an Spinndüsen mit der Folge von Filamentbrüchen.

Zur Vermeidung dieser Nachteile wurden verschiedene Lösungen untersucht. Häufig wurde versucht, zusätzlich neben den Kupferstabilisatoren weitere organische oder anorganische Verbindungen einzusetzen, die synergistisch auf den Stabilisierungsprozess wirken sollen. Beschrieben sind bspw. der Einsatz von Kupferphosphinverbindungen sowie Zusätze von Mercaptobenzimidazol- oder organischen Halogenverbindungen. Eine andere Lösung wurde in [DE19847626] beschrieben, wo anstelle eines Halogensalzes eine hochhalogenierte organische Phosphatverbindung eingesetzt werden kann. Durch diese Maßnahmen konnten jedoch die bekannten Nachteile nicht vollständig beseitigt werden, was zumindest auf die Kriechstromfestigkeit der Polyamide zutrifft.
Weiterhin wird auf die Notwendigkeit des Einsatzes von Synergisten neben Kupferstabilisatoren hingewiesen [DE69415493]. Hier wurden Polyolefine wie Polyethylen, Polypropylen und Ethylen-Propylen-Copolymere empfohlen, die jedoch wiederum als Nachteil eine begrenzte Kompatibilität zu Polyamiden aufweisen. Vorgeschlagen wurde auch, Kupferverbindungen und reaktive Substanzen auf Basis von Bis-(2-Oxazolinen) in einem binären System einzusetzen, um die bekannte stabilisierende Wirkung von Kupfer in hohen Konzentrationen von bis zu 1000 ppm und durch eine Kettenverlängerung der Polyamide durch die Reaktivsubstanzen miteinander zu verbinden [JP60248730].
Ausgehend von den oben beschriebenen Problemen und Nachteilen des Standes der Technik war es Aufgabe der vorliegenden Erfindung, eine stabilisierte Polyamidzusammensetzung zu formulieren, welche halogenarm ist, die mechanischen Eigenschaften der Polyamide nicht negativ beeinflusst und gleichzeitig die Dauergebrauchstemperatur anhebt und somit die bisher bekannten Nachteile überwindet.
Diese Aufgabe wird durch stabilisierte Polyamidzusammensetzungen nach Anspruch 1 gelöst.

Überraschenderweise wurde gefunden, dass Kupfersalze, die üblicherweise in Kombination mit einem hohen Überschuss von Alkalihalogeniden als Stabilisatorsystem eingesetzt werden, auch ohne zusätzliches Halogenid ebenso mit Carbonsäure-(2-Oxazolin)-Derivaten halogenarme stabile Kupfersalz-Organoligand-Komplexe bilden. Bekannt ist, dass Stickstoffhaltige organische Substanzen als mehrzahnige Liganden zur Komplexierung zahlreicher Katalysatormetalle für chemische Reaktionen eingesetzt werden können [Ch. Wei et al., J. Am. Chem. Soc. 124(2002)5638-5639]. Vor allem war überraschend, dass die erfindungsgemäßen Kupfersalz-Organoligand-Komplexe aus einer Kombination von Alkylcarbonsäure-(2-oxazolinen) und einem Kupfersalz stöchiometrisch definiert aufgebaut, luftbeständig und lagerstabil sind und eine neue Klasse von halogenarmen Kupferstabilisatoren bilden. Weiter war überraschend, dass Polyamidzusammensetzungen nach Anspruch 1 so stabilisiert werden können, dass sie verbesserte Eigenschaften aufweisen und höhere Dauergebrauchstemperaturen besitzen ohne dass Kettenverlängerungen auftreten.
Darüber hinaus war überraschend, dass neben Kupfersalzen auch andere Metallsalze durch Verbindungen mit 2-Oxazolinringen als Liganden stabil komplexiert werden können. So kann man weitere verschiedene Additive angeben, mit denen Polyamidformmassen zusätzliche funktionelle Eigenschaften wie antibakterielle Wirksamkeit, Licht- oder Energie-absorbierende Eigenschaften erhalten können.
Die oben beschriebene Aufgabe wird nun dadurch gelöst, dass mindestens ein Polyamid und mindestens ein Metallsalz-Organoligand-Komplex nach Anspruch 1 in der stabilisierten Polyamidzusammensetzung vorliegen. Gleichzeitig stellt die Erfindung ein Verfahren zur Herstellung einer funktionalisierten Polyamidzusammensetzung mit erhöhter Wärmestabilität und funktionelle Eigenschaften nach Anspruch 7 dar. Das mindestens eine Polyamid kann irgendein Polyamid sein. Polyamide sind Polymere, in denen wiederkehrende Carbonsäure- Amidgruppen enthalten sind. Sie werden aus polykondensierenden Umsetzungen von Diaminen mit Dicarbonsäuren bzw. ihren Carbonsäurefunktionellen Derivaten oder aus Aminocarbonsäuren bzw. ihren Derivaten wie z.B. Lactamen erhalten. Durch Auswahl, Variation oder Kombination der zur Polykondensation herangezogenen Monomeren sind Polyamide verschiedener chemischer Struktur zugänglich. Entsprechend der Erfindung können somit stabilisierte oder funktionalisierte Polyamidformmassen aus den wichtigen Standardpolyamiden Polyamid 6 (aus ε-Caprolactam), Polyamid 6.6 (aus Hexamethylendiamin und Adipinsäure) Anwendung finden. Weiterhin können Polyamid 11, Polyamid 12, Polyamid 6.10 teilaromatische Polyamide eingesetzt werden. Erfindungsgemäß können neben diesen Polymeren auch Co-Polyamide, Block-Co-Polyamide und Polyamid-Blends verwendet werden.
Die erfindungsgemäßen Metallsalz-Organoligand-Komplexverbindungen sind stets durch eine Kombination aus einem Metallsalz mit einem Organoliganden aufgebaut. Das Metallsalz kann ein beliebiges Metallsalz sein, das aus einem Metallkation und einem anorganischen oder organischen Anion besteht. Beispiele geeigneter Metallsalze sind die Kupfer(I)-Salze CuJ, CuBr, CuCl, die Kupfer(II)-Salze CuCl₂, Kupferacetat, Kupfersulfat. Weitere Beispiele geeigneter Metallsalze sind Silbernitrat, Kobalt(II)-chlorid, Molybdän-Phosphorsäure-hydrat, Zinn(II)-chlorid, Zink(II)-chlorid, Zink(II)-jodid, Mangan(II)-acetat. Die als Organoligand in den Metallsalz-Organoligand-Komplexen enthaltene wirksame Substanz sind 2-Oxazolinderivate organischer Carbonsäuren. 2-Oxazoline (auch bezeichnet als 4,5-Dihydrooxazole) sind heterozyklische 5-Ringverbindungen, die jeweils ein Sauerstoffatom, ein Stickstoffatom und eine Doppelbindung im Ring enthalten. Die erfindungsgemäß als Organoliganden verwendeten 2-Oxazoline enthalten die Heteroatome Sauerstoff in 1-Stellung, den Stickstoff in 3-Stellung, die Doppelbindung im heterozyklischen Ring befindet sich zwischen dem Kohlenstoffatom 2 und dem Stickstoffatom: 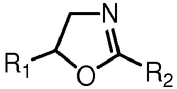 R₁, R₂ = H, aliphatisch, aromatisch

Bild: chemische Struktur 2-Oxazoline (4,5-Dihydrooxazole)

Besonders bevorzugte Komplexe werden erhalten aus:
- Silbernitrat und 2,2'-(*meta*-Phenylen)-bis-(4,5-dihydro-oxazol) im molaren Verhältnis 1 : 1. Diesem Komplex wurde die folgende Formel zugeordnet: 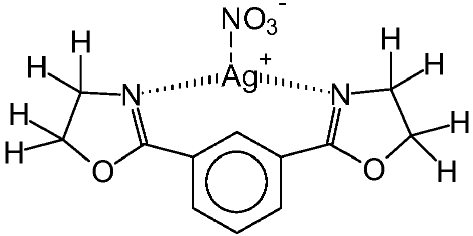 Nitrato-[2,2'-meta-phenylen-bis-(4,5-dihydro-oxazol)]-argentat
- Silbernitrat und 2-Heneicosyl-4,5-dihydro-oxazol im molaren Verhältnis 1 : 2, mit der Strukturformel 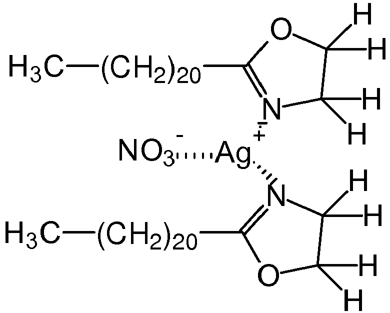 Nitrato-bis-(2-heneicosyl-4,5-dihydro-oxazol)-argentat
- Kupfer(I)chlorid und 2,2'-(para-Phenylen)-bis-4,5-dihydro-oxazol im molaren Verhältnis 1 : 1. Chloro-[2,2'-para-phenylen-bis-(4,5-dihydro-oxazol)]-cuprat
- Kupfer(II)chlorid und 2,2'-(para-Phenylen)-bis-4,5-dihydro-oxazol im molaren Verhältnis 1 : 1.
- Dichloro-[2,2'-para-phenylen-bis-(4,5-dihydro-oxazol)]

Chirale Komplexe aus Palladium(II)- und Kupfer(II)-Salzen und Liganden mit Oxazolin-Gruppen wurden bereits beschrieben in Chemistry Letters 35 [2006] 172 - 173. Sie sind vorgesehen als Katalysatoren in asymmetrischen Diels-Alder-Reaktionen. Die in der vorliegenden Erfindung eingesetzten Komplexe sind dagegen nicht chiral, d.h. sie weisen keine Chiralitätszentren auf, oder es handelt sich um Racemate. Sie haben keine katalytische Wirkung und werden nicht als Katalysatoren eingesetzt.

2-Oxazoline entstehen beispielsweise bei der Dehydratisierung von *N*-(2-Hydroxyalkyl)-amiden durch innermolekulare Zyklisierung. Man kann 2-Oxazoline aber auch aus β-Halogen-alkylamiden durch Umsetzung mit starken Basen wie z.B. alkoholischen Alkalien gewinnen. Weiterhin können sie durch eine Kondensationsreaktion von 1,2-Aminoalkoholen mit Carbonsäureestern, Carbonsäureamiden oder Nitrilen erhalten werden. Erfindungsgemäß werden 2-Oxazoline als Derivate organischer Carbonsäuren verwendet.
Die organische Carbonsäure kann irgendeine Carbonsäure sein, die aliphatischer, aromatischer oder aliphatisch-aromatischer Natur ist und monofunktionell, difunktionell oder polyfunktionell hinsichtlich der Zahl vorhandener Carbonsäuregruppen aufgebaut ist. Beispiele geeigneter Carbonsäuren, aus denen 2-Oxazolinderivate erfindungsgemäß als Ligandensysteme zur Komplexierung von in den Metallsalzen enthaltenen Metallkationen gewonnen werden können, sind die monofunktionellen Carbonsäuren Palmitinsäure [57-10-3], Stearinsäure [57-11-4], Behensäure [112-85-6], 10-Undecensäure [112-38-9], Linolensäure [463-40-1], Ölsäure [112-80-1], Erucasäure [112-86-7], weiterhin die difunktionellen Substanzen Oxalsäure [144-62-7], Adipinsäure [124-04-9], Isophthalsäure [121-91-5], Terephthalsäure [100-21-0], 2-Bromterephthalsäure [586-35-6] sowie die trifunktionelle Trimesinsäure [554-95-0].
Die erfindungsgemäßen Metallsalz-Organoligand-Komplexverbindungen entstehen nun dadurch, dass mindestens eines der oben aufgeführten Metallsalze in einem geeigneten Lösungsmittel oder Lösungsmittelgemisch vollständig aufgelöst wird und zu dieser homogenen Metallsalzlösung mindestens eines der vorgenannten geeigneten Carbonsäure-2-Oxazoline als Organoligand, ebenfalls in einem geeigneten Lösungsmittel gelöst, zugegeben wird. Die verwendeten Lösungsmittel oder Lösungsmittelgemische für das Metallsalz und das mit ihm kombinierte 2-Oxazolin müssen vollständig miteinander mischbar sein. Bevorzugte Lösungsmittel sind aliphatische primäre Alkohole wie z.B. Methanol, Ethanol, n-Propanol, Isopropanol und Butanol sowie halogenierte Kohlenwasserstoffe wie Dichlormethan, Chloroform oder Tetrachlorkohlenstoff. Vorzugsweise werden Methanol, Ethanol oder n-Propanol verwendet. Die Konzentrationen der Komponenten in den zu vermischenden Lösungen betragen 0,1 bis 1 mol/l, vorzugsweise 0,2 bis 0,4 mol/l. Die den Metallsalz-Organoligand-Komplexbildenden Komponenten müssen in einem speziellen äquimolaren Verhältnis des Organoliganden zu dem Metallsalzkation in dem Lösungsmittelgemisch vorliegen. Das spezielle äquimolare Verhältnis der Komponenten ist von der chemischen Struktur der 2-Oxazoline und nicht von der Art des verwendeten Metallsalzes abhängig. Erfindungsgemäß müssen für die Herstellung der Komplexverbindungen die äquimolaren Verhältnisse von Organoligand zu Metallsalzkation in den Lösungsgemischen von 2:1, 1:1 oder 1:2 mol/mol eingehalten werden, damit stabile Komplexverbindungen gebildet werden können. Günstigerweise können für verschiedene Organokomplexe folgende molare Verhältnisse gewählt werden:

**Tabelle 1:**

| Bevorzugte Kombinationen von 2-Oxazolinligand und Metallsalz und molare Zusammensetzungen in den Organoligand-Metallsalz-Komplexen | | |
|---|---|---|
| **Organoligand (OL) als 2-Oxazolinderivat** | **Molverhält -nis OL/M (mol/mol)** | **Metallsalz (M)** |
| Palmitinsäure-2-oxazolin | 2:1 | Kupfer(I)-chlorid |
| Stearinsäure-2-oxazolin | 2:1 | -bromid |
| 10-Undecensäure-2-oxazolin | 2:1 | -jodid |
| Behensäure-2-oxazolin | 2:1 | oder |
| Erucasäure-2-oxazolin | 2:1 | Kupfer(II)-chlorid |
| Linolensäure-2-oxazolin | 2:1 | -sulfat |
| Ölsäure-2-oxazolin | 2:1 | oder |
| ÖEAO | 2:1 | AgNO₃ |
| Oxalsäure-2,2'-bis(2-oxazolin) | 1:2 | oder |
| Isophthalsäure-1,3-bis(2-oxazolin) | | SnCl₂ |
| | 1:1 | oder |
| Terephthalsäure-1,4-bis(2-oxazolin) | | ZnCl₂, ZnJ₂ |
| | 1:1 | oder |
| Adipinsäure-1,6-bis(2-oxazolin) | | Mn(II)-acetat |
| | 1:1 | oder |
| Trimesinsäure-tris- (2-oxazolin) | 1:1 | H₃P (Mo₃O₁₀)₄ |
| | | oder |
| | | Kobalt (II)-chlorid |

Die Mischung aus der mindestens einen 2-Oxazolinlösung und der mindestens einen Metallsalzlösung wird in homogener Lösung bei einer Temperatur zwischen 20 und 60 C, vorzugsweise zwischen 22 und 28 °C für einen Zeitraum von 1 bis 6 Stunden, vorzugsweise 2 bis 3 Stunden, intensiv vermischt. Auf Grund der räumlichen Anordnung der heterozyklischen Atome im 2-Oxazolinring und der Wirksamkeit des Stickstoffatoms als Elektronendonator können die 2-Oxazolinverbindungen als Chelatbildner für Metallionen auftreten und stabile Metallsalz-Komplexe bilden. Erfindungsgemäß fallen die Metallsalz-2-Oxazolinkomplexe nach einer gewissen Verweilzeit als Feststoffe aus den Lösungen an. Sie können dann auf übliche Weise durch Filtration, Reinigung durch Wäsche und Trocknung isoliert werden.
Verwendet man als Metallsalze zur Komplexbildung mit 2-Oxazolinverbindungen Kupfersalze, werden auf einfache Weise wirksame Stabilisatoren für Polyamide, insbesondere für die Verbesserung der Wärmestabilität und für eine deutliche Anhebung der Dauergebrauchstemperatur, erhalten. Die Kupfersalz-2-Oxazolin-Komplexe können in einfacher Weise den Polyamiden vorteilhafterweise vor ihrer Verarbeitung durch Schmelzeextrusionsprozesse zugegeben werden, da sie luftbeständig und lagerstabil sind. Sie können so mit der Polyamidmatrix direkt verarbeitet werden. Ebenso möglich ist die Herstellung eines Masterbatches, welches später mit anderen Polyamiden verschnitten werden kann. Während der Verarbeitung der Polyamidformmassen verteilen sich die Komplexverbindungen gleichmäßig und homogen in der Polymerschmelze. Überraschenderweise werden keine Agglomerationen von Metallsalzclustern gefunden. Die Metallkomplexe liegen nach der Polyamidverarbeitung in der Masse in Partikelgößen kleiner als der Nanometerbereich vor.

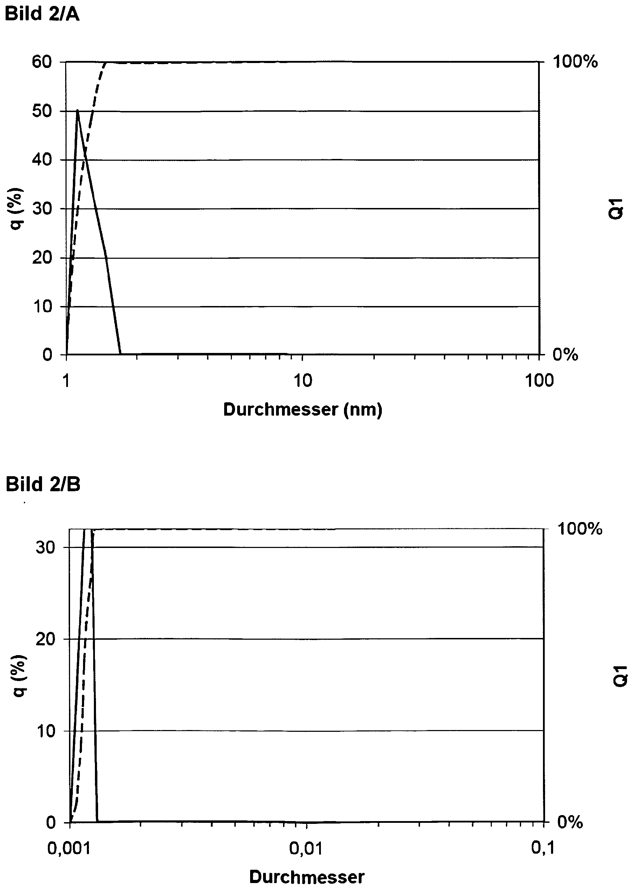

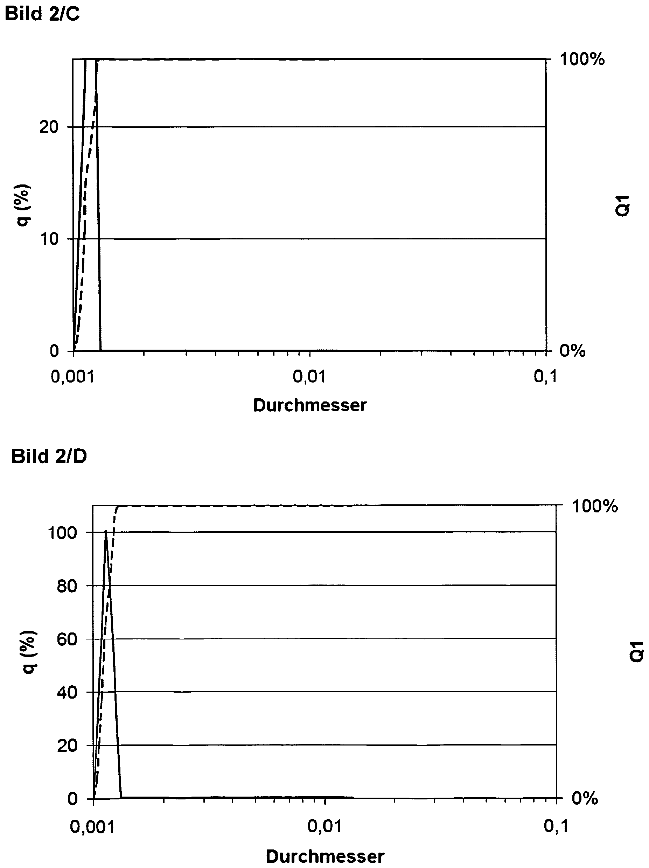

Die Bilder 2 A-C zeigen die Analyse der Partikelmessungen verschiedener Polyamidzusammensetzungen als grafische Darstellungen. Es ist zu erkennen, dass in den Polyamidzusammensetzungen keine Teilchen oder Agglomerate vorliegen. Somit sind in den erfindungsgemäßen Polyamidzusammensetzungen die Kupferanteile durch die Organokomplex-Formulierungen in ihrer molekularen Form homogen verteilt. In den Bildern 3/A bis 3/D sind die Ergebnisse der REM-EDX-Analysen zum Nachweis der Verteilungen des Elementes Kupfer auf den Probenoberflächen verschiedener Polyamidzusammensetzungen gezeigt. Es ist deutlich zu erkennen, dass die Kupferanteile gleichmäßig in der Polyamidmatrix verteilt sind und gleichzeitig keine größeren Agglomerationen vorliegen. Diese homogene Kupferverteilung wird insbesondere durch die Organokomplexe hervorgerufen.
Der Polyamidverarbeitungsprozess wird durch den Zusatz der Kupfersalz-Komplexstabilisatoren in keiner Weise beeinträchtigt. Die mit den Kupferkomplexen stabilisierten Polyamidformmassen können wie üblich zu Formteilen durch Spritzgießen, Tiefziehen, Blasformen oder zu Monofilen oder Filamenten durch Filamentspinnprozesse verformt werden.
Die Menge an Kupfer, welche in Form der Kupfersalz-2-Oxazolin-Komplexverbindungen zur wirksamen Stabilisierung in die Polyamidformmassen eingebracht wird, ist in weiten Grenzen frei wählbar, solange die mechanischen Eigenschaften der Formmassen nicht negativ beeinflusst werden. Üblicherweise liegt der Kupferanteil zwischen 10 und 1000 ppm bezogen auf die Gesamtformulierung. Bevorzugt werden 30 bis 130 ppm Kupfer eingesetzt. Da erfindungsgemäß kein zusätzliches Halogen in Form von Alkalihalogeniden zur Stabilisierung des Kupfers in der Polymermatrix zugegeben werden muss, können die stabilisierten Polyamidzusammensetzungen nach Anspruch 1 als halogenarm angegeben werden. Der Halogenanteil in den Polymidformmassen entspricht somit nur dem, welcher eventuell als Anion des Metallsalzes für die Bildung des Metallsalz-Organoligand-Komplexes eingebracht wird. Werden Metall-Halogen-Salze zur Komplexbildung verwendet, liegt der Halogenanteil üblicherweise unterhalb von 200 ppm. Werden halogenfreie Salze wie z.B. Nitrate, Acetate oder Phosphate eingesetzt, resultieren vollständig halogenfreie stabilisierte Polyamidformmassen. Daraus ergibt sich je nach Auswahl der Metallsalz-Organoligand-Komplexstabilisatoren ein Verhältnis von Kupfer zu Halogen von 1:0 (Halogenfreie Metallsalze) bis 1:1,1 (Kupfer(II)-Halogenide), bevorzugt ist der Bereich von 1:0,6 (Kupfer(I)-Halogenide) bis 1:1,1.
Die erfindungsgemäßen Polyamidzusammensetzungen sind weiterhin hervorragend geeignet im Hinblick auf die Einstellung weiterer zusätzlicher Materialeigenschaften. Diese variable Modifizierungsmöglichkeit von Polyamidformmassen ergibt sich insbesondere dadurch, dass auch weitere Metallsalze stabile Metallsalz-Organoligand-Komplexverbindungen bilden.
Setzt man zur Komplexbildung mit 2-Oxazolinen keine Kupfersalze, sondern Metallsalze ein, in denen andere Metallkationen vorhanden sind, werden ebenfalls stöchiometrische Komplexe gebildet. Sie können wiederum verschiedenen Polyamiden ebenso als Additive zugemischt und in dieser Mischung mit ihnen verarbeitet werden. Derartig formulierte Polyamidzusammensetzungen weisen zusätzliche funktionelle Eigenschaften auf. Zusätzliche funktionelle Eigenschaften können antibakteriell wirksamer Natur sein oder aber auch Beiträge zur Licht- oder Energieabsorption liefern. Wird z.B. eine Metallsalz-Organoligand-Komplexverbindung verwendet, in denen Silberkationen vorhanden sind, können antibakteriell funktionalisierte Polyamidformmassen angegeben werden. Üblicherweise beträgt der Silberanteil in der Gesamtformulierung zwischen 200 ppm und 3000 ppm, bevorzugt werden 600 bis 1500 ppm eingesetzt. Beispielsweise können mit Sibersalz-Organoligand-Komplexen enthaltenden Polyamidformmassen gegen Staphylococcus aureus und Klebsiella pneumoniae im Hinblick auf antibakterielle Eigenschaften signifikant hochwirksame Formulierungen angegeben werden.
Weiterhin können neben Kupfer zur Wärmestabilisierung und Silber zur antibakteriellen Ausrüstung von Polyamiden außerdem die Metalle Molybdän, Zink, Zinn, Titan, Kobalt und Mangan in Metallsalz-Organoligand-Komplexen Verwendung finden. Setzt man mindestens eine dieser Metallsalz-Organoligand-Komplexverbindung Polyamiden zu, erhalten modifizierte Polyamidformulierungen zusätzliche licht- oder Energie-absorbierende Eigenschaften. Beispielsweise kann die Transmission von UV- oder Lichtstrahlung bei Durchtritt durch Folien, in denen diese Komplexe enthalten sind, beeinflusst werden. Wird z.B. Molybdän-haltiges Metallsalz als Metallsalzkomponente in einem Organoliganden eingesetzt, wird eine Strahlungsabsorption bei Bestrahlung einer Polyamidfolie im Wellenlängenbereich zwischen 300 und 350 nm generiert. Üblicherweise sind in diesen Polyamidformmassen 1000 bis 4000 ppm Molybdän enthalten, vorzugsweise liegt die Einsatzmenge zwischen 2000 und 3000 ppm Mo. Durch die Verwendung weiterer Metallkomplexverbindungen in Polyamiden kann der Strahlungsabsorptionsbereich gezielt verändert werden. Wird ein Silberhaltiger Komplex in Polyamiden eingearbeitet, erhöht sich die Wellenlänge der absorbierten Strahlung auf 410 nm.
Die erfindungsgemäßen Polyamidzusammensetzungen können ohne Einschränkungen mit weiteren üblichen Additiven, Füllstoffen, Verarbeitungshilfsmitteln, Farbpigmenten oder Gleitmitteln versehen und verarbeitet werden, ohne dass der Stabilisierungseffekt oder Funktionalisierungseffekt beeinträchtigt wird. Durch die beschriebenen Vorteile eignen sich die Polyamidzusammensetzungen besonders zur Herstellung von Form- und Bauteilen, Platten und Folien. Bevorzugte Einsatzgebiete können im Elektronikbereich Platten und Träger für elektronische Bauteile und im Fahrzeugbereich Elektrobauteile wie Gehäuse oder Stecker sowie Formteile zur Abdeckung wichtiger Bauteile sein. Die Herstellung stabilisierter oder funktionalisierter Fasern oder Filamenten ist ebenso hervorragend möglich. Die Anwendungen liegen hier besonders im Bereich hitzestabilisierter technischer Textilien oder antibakteriell ausgerüsteter textiler Fasern für Bekleidung oder medizinische Anwendungen.
Die Herstellung der Polyamidzusammensetzungen erfolgt üblicherweise durch Mischen mindestens eines Polyamids mit mindestens einem Metallsalz-Organoligand-Komplex wie im Anspruch 1 angeführt. Die Vermischung der Komponenten kann in gebräuchlichen Mischeinrichtungen erfolgen. Dabei wird Polyamid in Chipsform, Plättchenform oder als Granulat mit einem pulverförmigen Organokomplex vorgemischt, die Mischung in einem geeigneten Apparat gemeinsam aufgeschmolzen und in der Schmelze homogenisiert. Bevorzugt wird allerdings so verfahren, dass eine Vorabmischung eines Metallsalz-Organoligand-Metallkomplexes in Form eines Masterbatches oder Vorkonzentrates hergestellt und dieses dem reinen Polyamid zugemischt wird, gegebenenfalls mittels einer Seitenstromdosierung an einer Extrusionsmaschine. Der Anteil des Metallsalz-Organoligand-Komplexes in einem Masterbatch richtet sich nach der Verträglichkeit mit dem Matrixmaterial, dem beabsichtigten Stabilisierungs- oder Funktionalisierungsgrad und der gewünschten Endkonzentration im Compound. Es ist möglich, Vorkonzentrate bis zu einer Konzentration von 10 Gewichts-% an Metallsalz-Organoligand-Komplex herzustellen.
Die Erfindung wird an nachfolgenden Ausführungen und Beispielen erläutert.

### Herstellung der Metallsalz-Organoligand-Komplexverbindungen

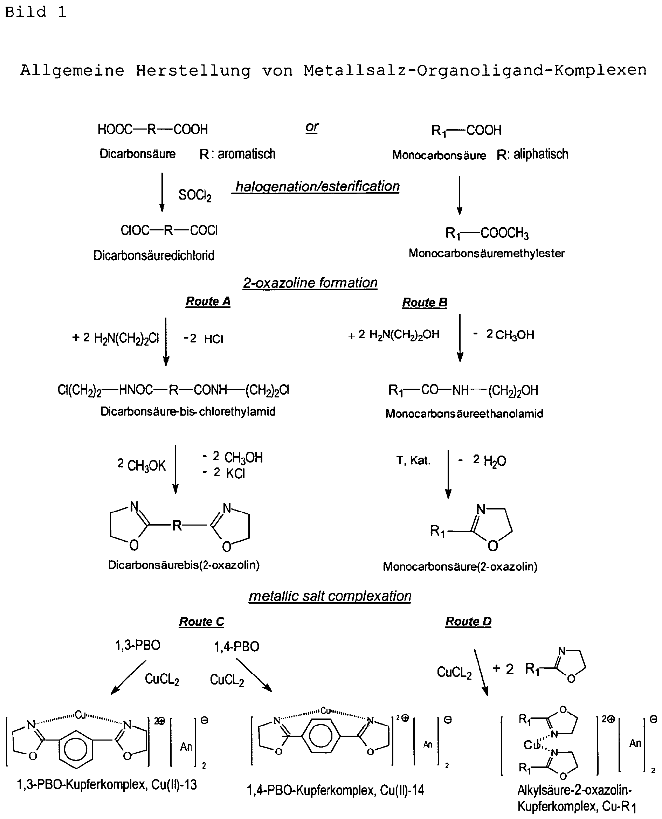

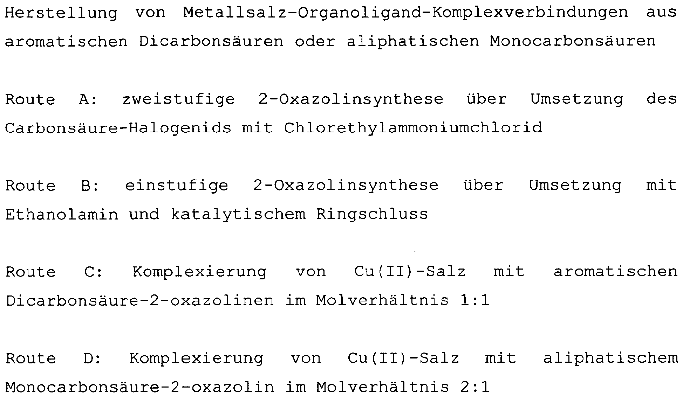

Für die Ausbildung eines stabilen Metallsalz-Organoligand-Metallkomplexes wird zunächst ein 2-Oxazolin-Derivat einer Mono-, Di- oder Tri-Carbonsäure hergestellt, da der 2-Oxazolinring als Ligandensystem zur Komplexierung des ausgewählten Metallkationes benötigt wird. Die 2-Oxazolin-derivate der Mono- Di- oder Tricarbonsäuren werden dann durch Mischen mit Lösungen der ausgewählten Metallsalze gemischt. Der chemische Weg zur Herstellung der Metallsalz-Organoligand-Metallkomplexe ist in Bild 1 am Beispiel von aromatischen Dicarbonsäuren und einer aliphatischen Monocarbonsäure dargestellt:
Nach dem in der Route A gezeigten Syntheseweg werden die 2-Oxazolinderivate aus aromatischen Di- oder Tricarbonsäuren in einem zweistufigen Verfahren hergestellt. Man setzt für die 2-Oxazolinsynthese die entsprechenden Carbonsäurechloride ein oder stellt die Dicarbonsäuredichloride bzw. Tricarbonsäuretrichloride auf einfache Weise durch Halogenierung der Carbonsäuren her, welche dann in einer ersten Synthesestufe mit Chlorethylammoniumchlorid umgesetzt werden. Man erhält so Dicarbonsäure-bis-(chlorethylamide) bzw. Tricarbonsäure-tris-(chlorethylamide), welche in einer zweiten Reaktionsstufe durch Ringschlussreaktion in die entsprechenden 2-Oxazolinderivate überführt werden. Man verfährt dabei so, dass durch Einwirkung von methanolischem Kaliumhydroxid Salzsäure eliminiert wird, worauf der heterozyklische Fünfring des 2-Oxazolins gebildet wird. Bei dem Oxalsäurederivat geht man vom Diethylester aus, der mit Chlorethylammoniumchlorid analog Route A weiter umgesetzt wird.

Im Falle der aliphatischen Monocarbonsäuren wird wie in Route B gezeigt eine einstufige 2-Oxazolinsynthese vollzogen. Man setzt hier einfache Ester der Monocarbonsäuren wie Methyl- oder Ethylester als Ausgangsstoffe ein und setzt diese mit Ethanolamin um und führt die Reaktion durch Einsatz eines Katalysators und Temperaturerhöhung bis zur abschließenden 2-Oxazolinbildung in einem Reaktionsansatz weiter. Der während der Aminolyse der Carbonsäureester abgespaltene Alkohol eignet sich zur Reaktionsverfolgung und wird während der Umsetzung aus dem Reaktionsgemisch als Kopfprodukt entfernt. Ebenso wird weiter durch Temperatursteigerung überschüssiges Ethanolamin entfernt, sodass das im Reaktionsgemisch verbleibende Carbonsäureethanolamid in das 2-Oxazolinderivat übergeht. Als Katalysator für die 2-Oxazolinbildung wird vorteilhafterweise Titan-(IV)-butylat verwendet.
Die nach Route A oder Route B erhaltenen Oxazolinderivate werden als Organoliganden zur Komplexierung von Metallsalzkationen in bestimmten molaren Verhältnissen verwendet.

Mit aromatischen Dicarbonsäure-2-oxazolinen können wie in Route C gezeigt Cu(II)-Salze im Molverhältnis 1:1 komplexiert werden.
Route D zeigt den Verlauf einer Komplexierung von Cu(II)-Salz mit aliphatischen Monocarbonsäure-2-oxazolinen, wobei ein Molverhältnis des Organoliganden zu dem Metallion von 2:1 verwendet wird.

Die Komplexbildung der 2-Oxazoline mit Metallsalzen erfolgt in einem weiteren separaten Schritt in homogener Lösung. Aromatische Metallsalz-Organoligand-Komplexe werden wie oben beschrieben in Mischungen der Komponenten Bis-(2-Oxazolin) und Metallsalz im molaren Verhältnis von 1:1 erhalten. Bei aliphatischen Monocarbonsäure-2-oxazolinen und ungesättigten n-Fettalkylsäure-(2-oxazolinen) muss das molare Verhältnis zum Metallsalz 2:1 eingehalten werden. Mit Oxalsäure-bis(2-oxazolin) wird im Verhältnis 1:2 gearbeitet.

### Beispiel 1

### 1,3-Phenylen-bis-(2-oxazolin)-Cu(II)-chlorid-Komplex (Cu(II)-13)

Das Isophthalsäure-bis-chlorethylamid wurde hergestellt, indem man 101,5 g (0,5 mol) Isophthalsäuredichlorid in 600 ml eines inerten Lösungsmittels löste und diese Lösung tropfenweise unter Kühlung (Wasser/Eis) und Rühren zu einem vorgelegten Gemisch aus 1200 ml Wasser, 116 g (1 mol) 2-Chlorethylammonium-hydrochlorid und 112 g (2 mol) KOH gab. Es wurde 1 Std. bei 0 bis 5 °C und eine weitere Stunde bei Raumtemperatur gerührt, wobei sich ein kompakter Niederschlag bildete. Dieser wurde abgesaugt, in der Folge mit Ethanol, Wasser, Ethanol gewaschen und bei 80 °C im Vakuum getrocknet.

| | |
|---|---|
| Ausbeute: 127 g (90 %) | F: 136-141 °C (DSC) |

Der Organoligand 1,3-Phenylen-bis-(2-oxazolin) (1,3-PBO) wurde hergestellt, indem man in einer Rückflussapparatur in 400 ml getrocknetem Methanol 34 g (0,6 mol) KOH portionsweise löst, danach 86,7 g (0,3 mol) Bis-Chlorethylamid einträgt und dann das Reaktionsgemisch langsam auf Rückflusstemperatur erwärmt. Es wurde 3 Std. gekocht, nach dem Abkühlen vom entstandenen KCl abgesaugt und das Produkt aus dem Filtrat nach Aufbewahrung im Kühlschrank durch erneutes Absaugen gewonnen. Die Wäsche erfolgte mit Methanol, getrocknet wurde im Vakuum bei 80°C. Es konnte aus einem Gemisch Benzol/Cyclohexan 7:3 umkristallisiert werden.

| | | |
|---|---|---|
| Ausbeute: | 32 g (52 %) | F: 142-146 °C (DSC) |
| Reinheit: | 96 % (Titration mit Perchlorsäure) | |

Die Kupfer(II)-salz-Organoligand-Komplexverbindung 1,3-Phenylen-bis-(2-oxazolin)-Cu(II)-chlorid-Komplex (Cu(II)-13) erhielt man, wenn in einer Rührapparatur 50 ml einer Mischung aus gleichen Volumenanteilen Ethanol und Wasser vorgelegt und dazu 1,7 g (0,01 mol) Cu-(II)-chlorid-dihydrat gelöst wurden und nach vollständiger Auflösung des Kupfersalzes 50 ml einer zuvor hergestellten Lösung aus dem gleichen Lösungsmittelgemisch und 2,16 g (0,01 mol) 1,3-PBO langsam zutropfte. Bei intensiver Mischung der Lösung erfolgte ein Farbumschlag von blau nach grün. Der Komplex fiel nach einiger Zeit als grüner Niederschlag aus. Es wurde noch 3 Std. bei Raumtemperatur nachgerührt. Der Feststoff wurde abgesaugt, mit Ethanol/Wasser gewaschen und anschließend im Vakuum getrocknet.
A: 1,9 g

| Elementaranalyse: | C | H | N | Cu |
|---|---|---|---|---|
| theor.: | 41,10 | 3,45 | 7,99 | 18,1 |
| gef.: | 40,29 | 3,65 | 7,57 | 19,8 |
| Ligandenverhältnis: | 1:1 | | | |

### Beispiel 2

### 1,3-Phenylen-bis-(2-oxazolin)-Cu(I)-chlorid-Komplex (Cu(I)-13)

Die Kupfer(I)-salz-Organoligand-Komplexverbindung 1,3-Phenylen-bis-(2-oxazolin)-Cu(I)-chlorid-Komplex erhielt man, wenn nach vorheriger Verfahrensweise 1,0 g (0,01 mol) Kupfer(I)-chlorid gelöst in Ethanol als Metallsalz zur Komplexbildung eingesetzt wurde.

| Elementaranalyse: | C | H | N | Cu |
|---|---|---|---|---|
| theor.: | 45,7 | 3,8 | 8,9 | 20,1 |
| gef.: | 43,9 | 3,4 | 7,5 | 21,2 |

### Beispiel 3

### 1,3-Phenylen-bis-(2-oxazolin)-Silber-nitrat-Komplex (Ag-13)

Der Silbersalz-Organoligand-Komplex wurde hergestellt, indem der Organoligand 1,3-Phenylen-bis-(2-oxazolin) (1,3-PBO) aus Beispiel 1 zur Komplexierung des Silbersalzes Silbernitrat verwendet wird. Man stellt 50 ml einer Mischung aus gleichen Volumenanteilen Ethanol und Wasser her und löst darin 1,7 g (0,01 mol) AgNO₃. Zu dieser Mischung ließ man 50 ml einer Lösung aus dem gleichen Lösungsmittelgemisch mit 2,16 g (0,01 mol) 1,3-PBO langsam zufließen. Beim Vermischen der Lösungen bildete sich ein weiß-grauer Niederschlag, der abfiltriert, gewaschen und im Vakuum getrocknet wurde.
A: 1,8 g

| Elementaranalyse: | C | H | N | Ag |
|---|---|---|---|---|
| theor.: | 37,33 | 3,13 | 10,88 | 27,9 |
| gef.: | 37,37 | 3,50 | 11,0 | 28,0 |
| Ligandenverhältnis: | 1:1 | | | |

### Beispiel 4

### 1,3-Phenylen-bis-(2-oxazolin)-Molybdän-Phosphat-Komplex (Mo-13)

Weiterhin kann man eine Molybdän-haltige Komplexverbindung mit dem Organoligand (1,3-PBO, Beispiel 1) angeben, wenn als Metallverbindung Molybdato-phosphorsäure-hydrat verwendet wird. Der Molybdän-Organoligand-Komplex wurde hergestellt, indem der Organoligand 1,3-Phenylen-bis-(2-oxazolin) aus Beispiel 1 zu einer Lösung der Molybdänverbindung gegeben wurde. Man legt 80 ml Ethanol/Wasser (50/50 v/v) mit 18,2 g (0,01 mol) darin aufgelöstem Molybdato-phosphorsäurehydrat vor und gibt tropfenweise den gelösten Organoligand 1,3-PBO aus Beispiel 1 hinzu. Das Produkt fiel unter Rühren innerhalb von 2 Stunden als weißer Niederschlag aus.
A: 18 g

| Elementaranalyse: | C | H | N | Mo |
|---|---|---|---|---|
| theor.: | 7,06 | 0,74 | 1,37 | 56 |
| gef.: | 9,1 | 1,8 | 1,7 | 76 |
| Ligandenverhältnis: | 1:1 | | | |

### Beispiel 5

### 1,3-Phenylen-bis-(2-oxazolin)-Zinnchlorid-Komplex (Sn-13)

Der Zinnsalz-Organoligand-Komplex wurde hergestellt, indem der Organoligand 1,3-Phenylen-bis-(2-oxazolin) (1,3-PBO) aus Beispiel 1 zur Komplexierung von Zinn(II)-chlorid verwendet wurde. Man löst in 50 ml wasserfreiem Ethanol 2,2 g (0,01 mol) SnCl₂-Dihydrat und gibt zu dieser Mischung langsam 50 ml einer Lösung des Organoliganden 1,3-PBO (2,16 g, 0,01 mol) hinzu. Innerhalb einer Stunde bildete sich ein weißer Niederschlag, der abfiltriert, gewaschen und im Vakuum getrocknet wurde.
A: 1,7 g

### Beispiel 6

### 1,3-Phenylen-bis-(2-oxazolin)-Titanbromid-Komplex (Ti-13)

Ebenso erhielt man eine Titan-haltige Komplexverbindung mit dem Organoligand (1,3-PBO, Beispiel 1), wenn als Metallsalz Titanbromid verwendet wird. Der Titan-Organoligand-Komplex wurde hergestellt, indem der in wasserfreiem Ethanol gelöste Organoligand 1,3-Phenylen-bis-(2-oxazolin) aus Beispiel 1 zu einer Lösung von Titantetrabromid gegeben wird. Man legte 60 ml Ethanol mit 3,7 g (0,01 mol) darin aufgelöstem TiBr₄ vor und gab tropfenweise den gelösten Organoligand 1,3-PBO hinzu. Der Komplex fiel unter Rühren innerhalb von 2 Stunden als weißer Niederschlag aus.
A: 1,7 g

### Beispiel 7

### 1,3-Phenylen-bis-(2-oxazolin)-Zinkjodid-Komplex (Zn-13)

Ebenso erhielt man eine Zink-haltige Komplexverbindung mit dem Organoligand (1,3-PBO, Beispiel 1), wenn als Metallsalz Zinkjodid verwendet wurde. Der Zink-Organoligand-Komplex wurde hergestellt, indem der in wasserfreiem Ethanol gelöste Organoligand 1,3-Phenylen-bis-(2-oxazolin) aus Beispiel 1 zu einer Lösung von Zinkjodod gegeben wird. Man legt 50 ml Wasser/Ethanol-Gemisch mit 3,2 g (0,01 mol) darin aufgelöstem ZnJ₂ vor und gibt tropfenweise den gelösten Organoligand 1,3-PBO hinzu. Der Komplex fiel unter Rühren innerhalb von 2 Stunden als weißer Niederschlag aus.
A: 3,5 g

| Elementaranalyse: | C | H | N | Zn |
|---|---|---|---|---|
| theor.: | 26,9 | 2,3 | 5,22 | 12 |
| gef.: | 27,3 | 3,5 | 5,22 | 15,7 |
| Ligandenverhältnis: | 1:1 | | | |

### Beispiel 8

### 1,4-Phenylen-bis-(2-oxazolin)-Cu(II)chlorid-Komplex (Cu(II)-14)

Das Terephthalsäure-bis-chlorethylamid wurde hergestellt, indem man 101,5 g (0,5 mol) Terephthalsäuredichlorid in 600 ml eines inerten Lösungsmittels löst und diese Lösung tropfenweise unter Kühlung (Eiswasser) und Rühren zu einem vorgelegten Gemisch aus 1200 ml Wasser, 116 g (1 mol) 2-Chlorethylammonium-hydrochlorid und 112 g (2 mol) KOH zugibt. Es wurde 1 Std. bei 0 bis 5 °C und eine weitere Stunden bei Raumtemperatur gerührt, wobei sich ein Niederschlag bildete. Dieser wurde abgesaugt, in der Folge mit Ethanol, Wasser, Ethanol gewaschen und bei 80 °C im Vakuum getrocknet.

| | |
|---|---|
| Ausbeute: 132 g (94 %) | F: 208-211 °C (DSC) |

Der Organoligand 1,4-Phenylen-bis-(2-oxazolin) (1,4-PBO) wurde hergestellt, indem man in einer Rückflussapparatur zu 400 ml getrocknetem Methanol 34 g (0,6 mol) KOH portionsweise löst, danach 86,7 g (0,3 mol) Bis-Chlorethylamid einträgt und dann das Reaktionsgemisch langsam auf Rückflusstemperatur erwärmt. Es wurde 3 Std. in der Wärme gerührt, nach dem Abkühlen vom entstandenen KCl abgesaugt und das Produkt aus dem Filtrat nach Aufbewahrung im Kühlschrank durch erneutes Absaugen gewonnen. Die Wäsche erfolgte mit Methanol, getrocknet wurde im Vakuum bei 80°C. Es konnte aus Ethanol umkristallisiert werden.

| | | |
|---|---|---|
| Ausbeute: | 33 g (54 %) | F: 238-241 °C (DSC) |
| Reinheit: | 96 % (Titration mit Perchlorsäure) | |

Die Kupfer(II)-salz-Organoligand-Komplexverbindung 1,4-Phenylen-bis-(2-oxazolin)-Cu(II)-chlorid-Komplex (Cu(II)-14) erhielt man, wenn in einer Rührapparatur 50 ml einer Mischung aus gleichen Volumenanteilen Ethanol und Wasser vorgelegt und dazu 1,7 g (0,01 mol) Cu-(II)-chlorid-dihydrat gelöst werden und nach vollständiger Auflösung des Kupfersalzes 50 ml einer zuvor hergestellten Lösung aus dem gleichen Lösungsmittelgemisch und 2,16 g (0,01 mol) 1,4-PBO langsam zutropft. Unter intensivem Rühren bildete sich eine blaugefärbte Suspension. Es wurde noch 3 Stunden bei Raumtemperatur nachgerührt. Der Feststoff wurde abgesaugt, mit Ethanol/Wasser gewaschen und anschließend im Vakuum getrocknet.
A: 3,3 g (94%)

| Elementaranalyse: | C | H | N | Cu |
|---|---|---|---|---|
| theor.: | 41,10 | 3,45 | 7,99 | 18,1 |
| gef.: | 42,42 | 3, 69 | 7,45 | 17,3 |
| Ligandenverhältnis: | 1:1 | | | |

### Beispiel 9

### 1,4-Phenylen-bis-(2-oxazolin)-Cu(I)chlorid-Komplex (Cu(I)-14)

Die Kupfer(I)-salz-Organoligand-Komplexverbindung 1,4-Phenylen-bis-(2-oxazolin)-Cu(I)-chlorid-Komplex erhielt man, wenn nach vorheriger Verfahrensweise 1,0 g (0,01 mol) Kupfer(I)chlorid als Metallsalz zur Komplexbildung eingesetzt wurden.

| Elementaranalyse: | C | H | N | Cu |
|---|---|---|---|---|
| theor.: | 45,7 | 3,8 | 8,9 | 20,1 |
| gef.: | 42,0 | 3,7 | 6,5 | 20,2 |

### Beispiel 10

### 1,4-Phenylen-bis-(2-oxazolin)-Molybdän-Phosphat-Komplex (Mo-14)

Man kann eine Molybdän-haltige Komplexverbindung mit dem Organoligand (1,4-PBO, Beispiel 8) herstellen, wenn als Metallverbindung Molybdato-phosphorsäure-hydrat verwendet wird. Der Molybdän-Organoligand-Komplex wurde gewonnen, indem der Organoligand 1,4-Phenylen-bis-(2-oxazolin) zu einer Lösung der Molybdänverbindung gegeben wurde. Man legte 80 ml Ethanol/Wasser (50/50 v/v) mit 18,2 g (0,01 mol) darin aufgelöstem Molybdato-phosphorsäurehydrat vor und gab tropfenweise den gelösten Organoligand 1,4-PBO aus Beispiel 8 hinzu. Das Produkt fiel unter Rühren innerhalb von 2 Stunden als weißer Niederschlag aus.
A: 26 g

| Elementaranalyse: | C | H | N | Mo |
|---|---|---|---|---|
| theor.: | 7,06 | 0,74 | 1,37 | |
| gef.: | 7,00 | 3,20 | 1,26 | |
| Ligandenverhältnis: | 1:1 | | | |

### Beispiel 11

### 1,4-Phenylen-bis-(2-oxazolin)-Silber-Nitrat-Komplex (Ag-14)

Der Silbersalz-Organoligand-Komplex wird hergestellt, indem der Organoligand 1,4-Phenylen-bis-(2-oxazolin) (1,4-PBO) aus Beispiel 8 zur Komplexierung des Silbersalzes Silbernitrat verwendet wird. Man stellt 50 ml einer Mischung aus gleichen Volumenanteilen Ethanol und Wasser her und löst darin 1,7 g (0,01 mol) AgNO₃. Zu dieser Mischung ließ man 50 ml einer Lösung eine aus dem gleichen Lösungsmittelgemisch mit 2,16 g (0,01 mol) 1,4-PBO langsam zufließen. Innerhalb einer Stunde bildete sich ein weiß-grauer Niederschlag, der abfiltriert, gewaschen und im Vakuum getrocknet wurde.
A: 1,9 g

| Elementaranalyse: | C | H | N | Ag |
|---|---|---|---|---|
| theor.: | 37,33 | 3,13 | 10,88 | 27,9 |
| gef.: | 37,3 | 3,4 | 11,0 | 27,8 |

### Beispiel 12

### 2,2'-Bis-Oxazolin-Cu(II)-Komplex, (Cu(II)-22)

Das Oxalsäure-bis-chlorethylamid stellt man her, indem eine Lösung aus 146 g (1 mol) Oxalsäurediethylester und 400 ml Ethanol wird unter Rühren und Kühlung (Eiswasser) in eine vorgelegte Mischung aus 600 ml Wasser, 232 g (2 mol) 2-Chlorethylammoniumchlorid und 56 g (1 mol) KOH langsam zugetropft wird. Das Mischen der Lösungen wurde so langsam vorgenommen, dass die Temperatur der Reaktionsmischung nicht über 40 °C anstieg. Es bildete sich ein Niederschlag des Umsetzungsproduktes, wobei noch 1 Std. nachgerührt wurde. Das Reaktionsgemisch wurde über Nacht im Kühlschrank aufbewahrt, danach der Niederschlag abgesaugt, mit Ethanol gewaschen und bei 80 °C im Vakuum getrocknet.

| | | |
|---|---|---|
| Ausbeute: | 162 g (88 %) | F: 203-205 °C (DSC) |

Der Organoligand 2,2'-Bis-oxazolin (2,2-BOX) wurde hergestellt, indem man in einer Rückflussapparatur in 400 ml getrocknetem Methanol 34 g (0,6 mol) KOH portionsweise löst, danach 63,9 g (0,3 mol) Bis-Chlorethylamid zusetzt und langsam auf Rückflusstemperatur erwärmt. Es wurde 3 Std. erwärmt, nach dem Abkühlen vom entstandenen KCl abgesaugt und das Produkt aus dem Filtrat durch Aufkonzentrieren gewonnen, indem das Filtrat bis zum Ausfallen eines Niederschlages eingedampft wurde. Es wurde abgesaugt, mit wenig Methanol gewaschen und im Vakuum bei 80°C getrocknet.

| | | |
|---|---|---|
| Ausbeute: | 14 g (33 %) | F: 212-214 °C (DSC) |

Die Kupfer(II)-salz-Organoligand-Komplexverbindung 2,2'-Bis-Oxazolin-Cu(II)-Komplex, (Cu(II)-22) erhält man, wenn in einer Rührapparatur 50 ml einer Mischung aus gleichen Volumenanteilen Ethanol und Wasser vorgelegt und darin 3,4 g (0,02 mol) Cu-(II)-chlorid-dihydrat gelöst werden und nach vollständiger Auflösung des Kupfersalzes 50 ml einer zuvor hergestellten Lösung aus dem gleichen Lösungsmittelgemisch und 1,4 g (0,01 mol) 2,2-BOX langsam zutropft. Das Reaktionsgemisch blieb zunächst eine klare Lösung, in der nach ca. 2 Std. eine Trübung durch Bildung eines feinen Niederschlages auftrat. Es wurde noch 2 Std. bei Raumtemperatur nachgerührt, danach der Feststoff abgesaugt, mit Ethanol/Wasser gewaschen und im Vakuum getrocknet.
A: 1,5 g (55%)

| Elementaranalysee: | C | H | N | Cu |
|---|---|---|---|---|
| theor.: | 17,62 | 1,97 | 6,85 | 31,1 |
| gef.: | 18,39 | 2, 98 | 4,11 | 27,2 |
| Ligandenverhältnis: | 1:2 | | | |

### Beispiel 13

### 2,2'-Bis-Oxazolin-Cu(I)-Komplex, (Cu(I)-22)

Die Kupfer(I)-salz-Organoligand-Komplexverbindung Cu(I)-22 erhält man, wenn nach vorheriger Verfahrensweise 2,0 g (0,02 mol) Kupfer(I)-chlorid als Metallsalz zur Komplexbildung eingesetzt werden.

### Beispiel 14

### 2,2'-Bis-Oxazolin-Silbernitrat-Komplex, (Ag-22)

Der Silbersalz-Organoligand-Komplex wird hergestellt, indem der Organoligand 2,2'-Bisoxazolin (2,2-BOX) aus Beispiel 12 zur Komplexierung des Silbersalzes Silbernitrat verwendet wird. Man stellte 50 ml einer Mischung aus gleichen Volumenanteilen Ethanol und Wasser her und löste darin 3,4 g (0,02 mol) AgNO₃. Zu dieser Mischung ließ man 50 ml einer Lösung eine aus dem gleichen Lösungsmittelgemisch mit 1,4 g (0,01 mol) 2,2-BOX langsam zufließen. Innerhalb einer Stunde bildete sich ein weißer Niederschlag, der abfiltriert, gewaschen und im Vakuum getrocknet wurde.
A: 1,6 g

### Beispiel 15

### Stearinsäure-2-oxazolin-Cu(II)chlorid-Komplex (Cu(II)-ST)

Stearinsäure wurde mit Methanol verestert, indem 100 g Stearinsäure mit 800 ml Methanol und 65 ml konz. Salzsäure gemischt und 3 Std. am Rückfluss gekocht wurden. Nach dem Abkühlen erstarrte der Ester oder setzte sich als ölige Schicht ab. Er wurde vom Methanol getrennt, in einen 500-ml-Kolben gegeben und von der Hauptmenge des Methanols getrennt, in dem unter Vakuum das Lösungsmittel und Wasser bis zu einer Vorlauftemperatur von 40 °C abdestilliert wurden. Der Liebigkühler wurde gegen einen Tropfenfänger ausgetauscht, die Apparatur mit einem auf 55 °C temperierten Kühler versehen und der Ester fraktioniert.

| | | |
|---|---|---|
| Ausbeute: 98 % | F: 39 °C | Verseifungszahl: 186,9 mg KOH/g |

Der Organoligand Stearinsäure-bis-(2-oxazolin) (ST) wird aus dem Methylester durch Aminolyse mit Ethanolamin hergestellt. Man erhitzte eine Mischung aus 120 g Stearinsäuremethylester, 61 g Ethanolamin und 1,4 g Titan-(IV)-butylat unter N₂-Atmosphäre langsam auf 140-175 °C und destillierte dabei Methanol ab. Danach wurde unter reduziertem Druck zunächst bei ca. 400 mbar, weiter bis auf 20 mbar überschüssiges Ethanolamin entfernt, bis die Temperatur im Kühler sank. Anschließend wurde über einen Tropfenfänger und einem auf 70 °C temperierten Kühler das Oxazolin fraktioniert. Die Reinheitsbestimmung des Oxazolins erfolgte konduktometrisch mit Perchlorsäure.

| | | |
|---|---|---|
| Ausbeute: | 80 % | F: 69,8 °C |
| Reinheit: | > 92 % | |

Die Kupfer(II)-salz-Organoligand-Komplexverbindung Stearinsäure-2-oxazolin-Cu(II)chlorid-Komplex (Cu(II)-ST) erhält man in einer Rührapparatur, wenn 50 ml einer Mischung aus gleichen Volumenanteilen Ethanol und Wasser vorgelegt, darin 1,7 g (0,01 mol) Cu-(II)-Chlorid aufgelöst, und nach vollständiger Auflösung des Kupfersalzes 100 ml einer ethanolischen Lösung von 6,2 g (0,02 mol) Stearinsäure-2-oxazolin langsam zugetropft werden. Während der Zugabe der Ligandenlösung entstand eine blaugefärbte Suspension. Das Reaktionsgemisch wurde weitere 3 Std. bei Raumtemperatur und unter Stickstoff gerührt, danach der Niederschlag abgesaugt, gewaschen und im Vakuum getrocknet.

| | |
|---|---|
| A: 5,6 g (75%) | F: 92-95 °C |

| Elementaranalyse: | C | H | N | Cu |
|---|---|---|---|---|
| theor.: | 63,76 | 10,43 | 3,72 | 8,43 |
| gef.: | 60,67 | 10,30 | 3,52 | 11,3 |
| Ligandenverhältnis: | 2:1 | | | |

### Beispiel 16

### Stearinsäure-2-oxazolin-Cu(I)chlorid-Komplex (Cu(I)-ST)

Die Kupfer(I)-salz-Organoligand-Komplexverbindung Cu(I)-ST erhält man, wenn nach vorheriger Verfahrensweise 1,0 g (0,01 mol) Kupfer(I)-chlorid als Metallsalz zur Komplexbildung eingesetzt werden.

### Beispiel 17

### Stearinsäure-2-oxazolin-Silbernitrat-Komplex (Ag-ST)

Die Silbernitrat-Organoligand-Komplexverbindung Ag-ST erhält man, wenn nach vorheriger Verfahrensweise 1,7 g (0,01 mol) AgNO₃ als Metallsalz zur Komplexbildung eingesetzt werden.

### Beispiel 18

### Behensäure-2-oxazolin-Cu(II)-chlorid-Komplex (Cu(II)-BE)

Behensäure wurde mit Methanol verestert, indem 100g Behensäure mit 800 ml Methanol und 65 ml konz. HCl gemischt und 3 Stunden am Rückfluss unter N₂ erhitzt wurden. Die noch heiße Reaktionsmischung wurde in ein temperierbares Kristallisationsgefäß umgefüllt und unter Rühren langsam abgekühlt. Während des fortschreitenden Kühlens fällt der Rohester in granulierter Form an. Er wird abfiltriert, in 150 ml Wasser gegeben und diese Mischung mit 5%-iger K₂CO₃-Lösung neutralisiert. Das feste Produkt wird erneut abgesaugt und in 200 ml Aceton gelöst. Bei erneutem Abkühlen über Nacht kristallisierte der Ester als feiner Niederschlag aus. Es wurde abgesaugt und bei Raumtemperatur °C im Vakuum getrocknet.

| | | | | | |
|---|---|---|---|---|---|
| Ausbeute: | 98% | F: 53°C | Verseifungszahl: | 154,7 mg | KOH/g |

Der Organoligand Behensäure-bis-(2-oxazolin) (BE) wurde aus dem Methylester durch Aminolyse mit Ethanolamin hergestellt. Man ging man so vor, dass 142 g Behensäuremethylester, 61 g Ethanolamin und 1,4 g Titan-(IV)-butylat gemischt und unter N₂-Atmosphäre langsam auf 140-175 °C erhitzt wurden, wobei Methanol abdestilliert. Danach wurde unter reduziertem Druck zunächst bei ca. 400 mbar, dann weiter bis 20 mbar, überschüssiges Ethanolamin entfernt, bis die Temperatur im Kühler sank. Das als Sumpf zurückbleibende Behensäure-Rohoxazolin wurde im Vakuum unter 1 mbar fraktioniert.

| | |
|---|---|
| Ausbeute: | 90 % F: 62 °C |
| Reinheit: | 92 % (Perchlorsäuretitration) |

Die Kupfer(II)-salz-Organoligand-Komplexverbindung Behensäure-2-oxazolin-Cu(II)chlorid-Komplex (Cu(II)-BE) erhält man in einer Rührapparatur, wenn 50 ml einer Mischung aus gleichen Volumenanteilen Ethanol und Wasser vorgelegt, darin 1,7 g (0,01 mol) Cu-(II)-Chlorid aufgelöst, und nach vollständiger Auflösung des Kupfersalzes 100 ml einer ethanolischen Lösung von 7,3 g (0,02 mol) Behensäure-2-oxazolin langsam zugetropft werden. Während der Zugabe der Ligandenlösung entstand eine hellgrüne Suspension. Es wurde noch 1 Tag bei Raumtemperatur nachgerührt, wobei ein blaugefärbter Niederschlag entstand. Der Feststoff wurde abgesaugt, mit Ethanol/Wasser gewaschen und anschließend im Vakuum getrocknet.

| | | | | |
|---|---|---|---|---|
| Ausbeute: 6,2 g (72 %) | Fp 82-84°C | | | |
| Elementaranalyse: | C | H | N | Cu |
| theor.: | 66,52 | 11,05 | 3,23 | 7,3 |
| gef.: | 68,11 | 11,56 | 3,17 | 5,2 |

Ligandenverhältnis: 2:1.

### Beispiel 19

### Behensäure-2-oxazolin-Cu(I)chlorid-Komplex (Cu(I)-BE)

Die Kupfer(I)-salz-Organoligand-Komplexverbindung Cu(I)-BE erhält man, wenn nach vorheriger Verfahrensweise 1,0 g (0,01 mol) Kupfer(I)-chlorid als Metallsalz zur Komplexbildung mit (BE) aus Beispiel 18 eingesetzt werden.

### Beispiel 20

### Behensäure-2-oxazolin-Silbernitrat-Komplex (Ag-BE)

Die Silbernitrat-Organoligand-Komplexverbindung Ag-BE erhält man, wenn nach vorheriger Verfahrensweise 1,7 g (0,01 mol) AgNO₃ als Metallsalz zur Komplexbildung mit dem Organoligand (BE) aus Beispiel 18 kombiniert werden.

Eine Übersicht der hergestellten Metallsalz-Organoligand-Komplexverbindungen und ihre bevorzugte Anwendung als Stabilisatoren oder funktionelle Additive enthält Tabelle 2

**Tabelle 2**

| Metallsalz-Organoligand-Komplexverbindungen und bevorzugte Anwendung in Polyamiden | | | | |
|---|---|---|---|---|
| Beispiel | Bezeichnung | Organoligand | Metallsalz | Anwendung¹⁾ |
| 1 | Cu(II)-13 | 1,3-PBO | CuCl₂*H₂O | S |
| 2 | Cu(I)-13 | 1,3-PBO | CuCl | S |
| 3 | Ag-13 | 1,3-PBO | AgNO₃ | A |
| 4 | Mo-13 | 1,3-PBO | H₃P(Mo₃O₁₀)₄ | L |
| 5 | Sn-13 | 1,3-PBO | SnCl₂ | L |
| 6 | Ti-13 | 1,3-PBO | TiBr₄ | L |
| 7 | Zn-13 | 1,3-PBO | ZnJ₂ | L, A |
| 8 | Cu(II)-14 | 1,4-PBO | CuCl₂*H₂O | S |
| 9 | Cu(I)-14 | 1,4-PBO | CuCl | S |
| 10 | Mo-14 | 1,4-PBO | H₃P (Mo₃O₁₀) | L |
| 11 | Ag-14 | 1,4-PBO | AgNO₃ | A |
| 12 | Cu(II)-22 | 2,2-BOX | CuCl₂*H₂O | S |
| 13 | Cu(I)-22 | 2,2-PBO | CuCl | S |
| 14 | Ag-22 | 2,2-BOX | AgNO₃ | A |
| 15 | Cu(II)-ST | ST (Stearins.-ox) | CuCl₂*H₂O | S |
| 16 | Cu(I)-ST | ST (Stearins.-ox) | CuCl | S |
| 17 | Ag-ST | ST (Stearins.-ox) | AgNO₃ | A |
| 18 | Cu(II)-BE | BE (Behens.-ox.) | CuCl₂*H₂O | S |
| 19 | Cu(I)-BE | BE (Behens.-ox.) | CuCl | S |
| 20 | Ag-BE | BE (Behens.-ox.) | AgNO₃ | A |

| | | | | |
|---|---|---|---|---|
| S: Stabilisator, Wärmestabilisierung A: antibakterielle Wirksamkeit L: Strahlungsabsorption | | | | |

### Herstellung der Polyamidzusammensetzungen nach Anspruch 1

Die Herstellung der erfindungsgemäßen Polyamidzusammensetzungen erfolgte im allgemeinen durch Mischen mindestens eines Polyamids mit mindestens einer Metallsalz-Organoligand-Komplexverbindung. Wie bereits oben beschrieben ist es dabei möglich, die Komponenten direkt vorzumischen und dann gemeinsam durch Aufschmelzen zu homogenisieren oder zunächst ein Vorkonzentrat herzustellen, in dem der Anteil an Metallsalz-Organoligand-Komplex bis zu 10 Masse-% betragen kann und dieses dann mit reinem Polyamid in Abmischungen bis zur gewünschten Konzentration zu verarbeiten. Dem Fachmann sind die üblichen Verarbeitungsmaschinen für die Herstellung von Formteilen, Folien oder Fasern geläufig.

Besonders geeignet für die Herstellung der Polyamidzusammensetzungen ist die Verwendung eines Zweischneckenxtruders, um eine homogene Mischung der Komponenten zu erreichen. Die Drehzahl der Extruderschnecken soll zwischen 75 und 150 U/min, bevorzugt bei 100 U/min liegen. Die Metallsalz-Organoligand-Komplexverbindung kann direkt entweder in der gewünschten Endkonzentration oder in der Konzentration des Vorkonzentrates in den Polyamidmassestrom dosiert werden, vorzugsweise mittels einer Drehzahl-gesteuerten Dosierschnecke. Eine Produktschonende und homogene Einarbeitung der Komplexverbindungen wird dann erzielt, wenn folgende Temperaturprofile an der Verarbeitungsmaschine, z.B. einem Extruder, eingehalten werden:

| Polymer: | PA 6 | PA 66 |
|---|---|---|
| Drehzahl Extruderschnecken (min⁻¹⁾: | 100 | 100 |
| Drehzahl Dosierschnecke min⁻¹: | | 15 (2,0 kg/h) |
| Temperatur Heizzonen 1-4 (°C): | 250 | 270 |
| | 270 | 290 |
| | 260 | 280 |
| | 250 | 270 |
| Schmelzetemperatur (°C): | 260 | 280 |
| Temperatur Granulierdüse (°C): | 250 | 270. |

Der Masseaustrag erfolgt als Polymerstrang und führt durch ein Wasserbad, aus dem direkt in eine Granuliermaschine gefördert wird. Das erhaltene Granulat wird in einer üblichen Trocknerapparatur unter Vakuum getrocknet.

Die oben beschriebene Verfahrensweise zur Herstellung der Polyamidzusammensetzungen führt zu einer homogenen und feinsten Verteilung der Metallkomplexe in der Polyamidmatrix. In Untersuchungen durch Partikelmessungen an Polymerlösungen (Lösungsmittel Ethanol/Lithiumchlorid) von mit Kupfer(II)-salz-Organoligand-Komplexverbindungen versehenen Polyamidzusammensetzungen waren keinerlei Agglomerationen der Metallverbindungen im nanoskaligen Bereich nachzuweisen:

| Typ | Metalls-Org. - Komplx. | Zusatz (Masse-%) | Kupfer (II) (ppm) | Halogen (ppm) |
|---|---|---|---|---|
| Nullprobe 2/A | - | - | 0 | 0 |
| Erfindung 2/B | Cu(II)-22 | 0,1 | 310 | 350 |
| Erfindung 2/C | Cu(II)-13 | 0,05 | 90 | 100 |
| Erfindung 2/D | Cu(II)-ST | 0,1 | 84 | 94 |

Weitere spezielle Untersuchungen zur Verteilung der Kupferanteile in ausgewählten erfindungsgemäßen Polyamidzusammensetzungen wurden mit speziellen Messungen durch Rasterelektronenmikroskopie (REM) in Verbindung mit energiedispersiver Röntgenspektroskopie (EDX) durchgeführt. An Bruchflächen von spritzgegossenen Normprüfstäben wurde die elementare Zusammensetzung der Proben analysiert, sodass die Verteilung der Elemente Kupfer oder Halogen angegeben werden kann:

| Probe | Metalls-Org. - Komplx. | Zusatz (Masse-%) | Kupfer (II) (ppm) | Halogen (ppm) |
|---|---|---|---|---|
| Nullprobe 3/A | - | - | 0 | 0 |
| Referenz 3/B | KJ/CuJ₂ | 0,15/0,045 | 90 | 1500 |
| Erfindung 3/C | Cu(II)-14 | 0,075 | 136 | 152 |
| Erfindung 3/D | Cu(II)-ST | 0,075 | 63 | 71 |

### Herstellung der Prüfkörper

Aus den erfindungsgemäßen Polyamidzusammensetzungen wurden mittels einer Spritzgießmaschine Norm-Prüfstäbe 1A bzw. 5A (ISO 527-2) für Zugversuch (DIN EN ISO 527) und Biegeversuch (DIN EN ISO 178) sowie mittels einer Filamentschmelzspinnanlage Filamente für Untersuchungen der antibakteriellen Aktivität (JIS L 1902) und mittels eines Folieextrusionsgerätes Folien für Messungen der Strahlungsabsorption hergestellt.

### Wärmealterung

Die wie oben beschrieben durch Spritzgießen hergestellten Norm-Prüfstäbe wurden in Umluft-Trockenschränken bei einer Temperatur von 150 °C durchgängig behandelt. In Zeitintervallen von jeweils 500 Stunden wurden Proben entnommen und hinsichtlich ihrer Materialeigenschaften untersucht. Geprüft wurden die mechanischen Eigenschaften Zugfestigkeit und Bruchdehnung nach DIN EN ISO 527-2 bzw. DIN EN ISO 178. Das Verhältnis aus den Festigkeitsparametern nach Wärmeexposition und den Werten des unbehandelten Ausgangszustandes wurde als Maßstab zur Bewertung der Wärmestabilität der Kupfersalz-Organoligand-Komplex-verbindungen in Polyamiden definiert und als Restfestigkeit, Restdehnung bzw. Restmodul bezeichnet. Weiterhin wird aus dem zeitlichen Verlauf der Festigkeitsparameter über die Wärmelagerdauer die Halbwertszeit angegeben, die als Zeitraum bis zur Abnahme der Werte auf unter 50% des jeweiligen Ausgangswertes festgelegt ist.

### Beispiel 21

### Stabilisierung von Polyamid 6, Normprüfkörper 5A (ISO 527-2),

Wärmelagerungsversuch bei 150 °C/Umluft, halogenarme Wärmestabilisierung mit Kupfersalz-Organoligand-Komplexstabilisatoren mit Kupfergehalten von 17 bis 312 ppm, Halogengehalten von 19 bis 348 ppm, Vergleichsvarianten mit anderen Kupferstabilisatoren bzw. Stabilisatoren, Werte enthält Tabelle 3

**Tabelle 3**

| Nr. | Variante | Stabilisator | Cu (ppm) | Halogen (ppm) | Ausgangswerte | | | Restfestigkeiten (%) | | | Halbwertszeit (h) |
|---|---|---|---|---|---|---|---|---|---|---|---|
| | | | | | Festigk. (MPa) | Dehnung (%) | Modul (MPa) | 500 (h) | 1000 (h) | 1500 (h) | |
| 1 | Nullprobe | - | 0 | 0 | 75,8 | 6,0 | 1693 | 40 | 24 | 28 | 400 |
| 2 | Referenz 1.1 | 0,02% MD 1024¹ | 0 | 0 | 78,4 | 6,8 | 1522 | 19 | 16 | 21 | 400 |
| 3 | Referenz 1.2 | 0,05% MD 1024¹ | 0 | 0 | 79,9 | 6,7 | 1573 | 25 | 23 | 15 | 400 |
| 4 | Referenz 1.3 | 0,1 % MD 1024¹ | 0 | 0 | 81,0 | 6,8 | 1558 | 19 | 23 | 24 | 400 |
| 5 | Referenz 2.1 | 0,02% B 1171²⁾ | 0 | 0 | 78,8 | 6,7 | 1580 | 31 | 30 | 22 | 450 |
| 6 | Referenz 2.2 | 0,05% B 1171²⁾ | 0 | 0 | 78,8 | 6,5 | 1592 | 27 | 32 | 25 | 450 |
| 7 | Referenz 2.3 | 0,10% B 1171²⁾ | 0 | 0 | 79,9 | 6,9 | 1538 | 26 | 22 | 19 | 450 |
| 8 | Erfindung | Cu(II)-22 | 62 | 70 | 78,2 | 6,1 | 1698 | 32 | 30 | 31 | 500 |
| 9 | Erfindung | Cu(II)-22 | 156 | 174 | 78,0 | 6,3 | 1673 | 55 | 34 | 61 | 550 |
| 10 | Erfindung | Cu(II)-22 | 312 | 348 | 78,7 | 6,7 | 1629 | 61 | 30 | 64 | 600 |
| 11 | Erfindung | Cu(II)-13 | 36 | 41 | 80,1 | 6,9 | 1655 | 87 | 35 | 25 | 700 |
| 12 | Erfindung | Cu(II)-13 | 90 | 100 | 80,9 | 6,8 | 1605 | 98 | 37 | 37 | 850 |
| 13 | Erfindung | Cu(II)-13 | 180 | 200 | 80,3 | 6,8 | 1564 | 89 | 36 | 29 | 800 |
| 14 | Erfindung | Cu(II)-14 | 36 | 41 | 81,0 | 6,8 | 1558 | 86 | 14 | 32 | 800 |
| 15 | Erfindung | Cu(II)-14 | 90 | 100 | 81,3 | 6,7 | 1566 | 96 | 41 | 34 | 900 |
| 16 | Erfindung | Cu(II)-14 | 180 | 200 | 79,0 | 6,7 | 1527 | 88 | 41 | 25 | 900 |
| 17 | Erfindung | Cu(II)-ST | 17 | 19 | 78,5 | 6,5 | 1543 | 34 | 48 | 20 | 950 |
| 18 | Erfindung | Cu(II)-ST | 42 | 47 | 80,6 | 6,5 | 1470 | 96 | 48 | 29 | 1000 |
| 19 | Erfindung | Cu(II)-ST | 84 | 94 | 81,2 | 6,5 | 1575 | 99 | 50 | 34 | 1000 |

| | | | | | | | | | | | |
|---|---|---|---|---|---|---|---|---|---|---|---|
| Wärmelagerung PA 6, Prüfkörper 5A ¹⁾ IRGANOX MD 1024 (Ciba), Metal Deactivator and Antioxidant, primary Phenolic Antioxidans and Hydrazide ²⁾ IRGANOX B1171 (Ciba), Antioxidant Blend for Processing and Long-Term Thermal Stabilization; Blend of Phenolic antioxidans and phosphite | | | | | | | | | | | |

Diese Ergebnisse zeigen deutlich, dass erfindungsgemäß stabilisierte Polyamidzusammensetzungen eine deutlich verbesserte thermische und oxidative Stabilität aufweisen und gleichzeitig halogenarm sind. Insbesondere sind hitzestabilisierte Polyamidzusammensetzungen erhältlich, wenn die Metallsalz-Organokomplexe Cu(II)-13 wie in Nr. 12/Tabelle 3, Cu(II)-14 wie in Nr. 15 und 16/Tabelle 3 sowie Cu-ST wie in Nr. 17, 18 und 19/Tabelle 3 zur Stabilisierung eingesetzt werden.

### Beispiel 22

### Stabilisierung von Polyamid 66, Normprüfkörper 5A (ISO 527-2),

Wärmelagerungsversuch bei 150 °C/Umluft, halogenarme Wärmestabilisierung mit Kupfersalz-Organoligand-Komplexstabilisatoren mit Kupfergehalten von 17 bis 312 ppm, halogengehalten von 19 bis 348 ppm, Vergleichsvarianten mit anderen Kupferstabilisatoren bzw. Stabilisatoren, Werte enthält Tabelle 4

**Tabelle 4**

| Nr. | Variante | Stabilisator | Cu (ppm) | Halogen (ppm) | Ausgangswerte | | | Restfestigkeiten (%) | | | Halbwertszeit (h) |
|---|---|---|---|---|---|---|---|---|---|---|---|
| | | | | | Festigk. (MPa) | Dehnung (%) | Modul (MPa) | 500 (h) | 1000 (h) | 1500 (h) | |
| 1 | Nullprobe | - | 0 | 0 | 87,1 | 6,7 | 1541 | 25 | 22 | 12 | 150 |
| 2 | Referenz 1.1 | 0,02% MD 1024¹ | 0 | 0 | 87,3 | 7,0 | 1626 | 23 | 20 | 21 | 200 |
| 3 | Referenz 1.2 | 0,05% MD 1024¹ | 0 | 0 | 86,3 | 6,9 | 1614 | 27 | 22 | 21 | 200 |
| 4 | Referenz 1.3 | 0,1 % MD 1024¹ | 0 | 0 | 79,5 | 6,0 | 1602 | 29 | 22 | 23 | 250 |
| 5 | Referenz 2.1 | 0,02% B 1171²⁾ | 0 | 0 | 85,9 | 6,8 | 1623 | 25 | 20 | 18 | 150 |
| 6 | Referenz 2.2 | 0,05% B 1171²⁾ | 0 | 0 | 86,6 | 7,2 | 1495 | 27 | 23 | 21 | 150 |
| 7 | Referenz 2.3 | 0,10% B 1171²⁾ | 0 | 0 | 82,9 | 6,5 | 1714 | 34 | 23 | 20 | 150 |
| 8 | Erfindung | Cu(II)-22 | 62 | 70 | 89,1 | 6, 8 | 1580 | 30 | 20 | 31 | 500 |
| 9 | Erfindung | Cu(II)-22 | 156 | 174 | 88,7 | 6, 8 | 1554 | 33 | 23 | 30 | 500 |
| 10 | Erfindung | Cu(II)-22 | 312 | 348 | 87,6 | 6,8 | 1499 | 45 | 33 | 38 | 600 |
| 11 | Erfindung | Cu(II)-13 | 36 | 41 | 86,1 | 6, 8 | 1508 | 30 | 25 | 18 | 400 |
| 12 | Erfindung | Cu(II)-13 | 90 | 100 | 84,4 | 6,8 | 1428 | 36 | 29 | 23 | 500 |
| 13 | Erfindung | Cu(II)-13 | 180 | 200 | 84,0 | 6,5 | 1423 | 65 | 43 | 22 | 1000 |
| 14 | Erfindung | Cu(II)-14 | 36 | 41 | 86,2 | 6,8 | 1413 | 21 | 21 | 17 | 400 |
| 15 | Erfindung | Cu(II)-14 | 90 | 100 | 87,0 | 6,7 | 1478 | 39 | 28 | 27 | 500 |
| 16 | Erfindung | Cu(II)-14 | 180 | 200 | 86,8 | 6,7 | 1585 | 59 | 42 | 25 | 900 |
| 17 | Erfindung | Cu(II)-ST | 17 | 19 | 87,6 | 6,7 | 1632 | 27 | 27 | 16 | 400 |
| 18 | Erfindung | Cu(II)-ST | 42 | 47 | 87,3 | 7,2 | 1452 | 42 | 24 | 20 | 500 |
| 19 | Erfindung | Cu(II)-ST | 84 | 94 | 87,3 | 6,8 | 1632 | 51 | 25 | 28 | 900 |

| | | | | | | | | | | | |
|---|---|---|---|---|---|---|---|---|---|---|---|
| Wärmelagerung PA 66, Prüfkörper 5A ¹⁾ IRGANOX MD 1024 (Ciba), Metal Deactivator and Antioxidant, primary Phenolic Antioxidans and Hydrazide ²⁾ IRGANOX B1171 (Ciba), Antioxidant Blend for Processing and Long-Term Thermal Stabilization; Blend of Phenolic antioxidans and phosphite | | | | | | | | | | | |

Diese Ergebnisse zeigen anschaulich, dass erfindungsgemäß auch stabilisierte Polyamid-66-Zusammensetzungen mit deutlich verbesserter Wirksamkeit gegen thermische und oxidative Einflüsse erhalten werden können und gleichzeitig halogenarm sind. Besonders wirksam in PA 66 sind die Metallsalz-Organokomplexe Cu(II)-13 wie in Nr. 13/Tabelle 4, weiterhin Cu(II)-14 wie in Nr. 16/Tabelle 4 und Cu-ST wie in Nr. 19/Tabelle 4.

Für eine Optimierung des Einsatzes von Kupfersalz-Organoligand-Metallkomplexverbindungen zur Stabilisierung von Polyamidzusammensetzungen wurden in zusätzlichen Versuchsreihen weitere Kupferkomplexe in Mischung mit PA 6 eingesetzt und verschiedene Kupferanteile eingestellt. Verarbeitet wurden diese Zusammensetzungen zu Normprüfkörpern 1A, welche für eine Temperzeit von bis zu 3000 Stunden im Umluftofen behandelt wurden. In Zeitabständen von 500 Stunden wurden Probekörper für die Prüfung der Materialeigenschaften entnommen.

### Beispiel 23

### Stabilisierung von Polyamid 6, Normprüfkörper 1A (ISO 527-2),

Wärmelagerungsversuch bei 150 °C/Umluft, halogenarme Wärmestabilisierung mit Kupfersalz-Organoligand-Komplexstabilisatoren mit Kupfergehalten von 55 bis 136 ppm, Halogengehalten 62 bis 152 ppm, Vergleichsvariante mit anderen Kupferstabilisatoren und Halogengehalt von 1500 ppm, Werte enthält Tabelle 5

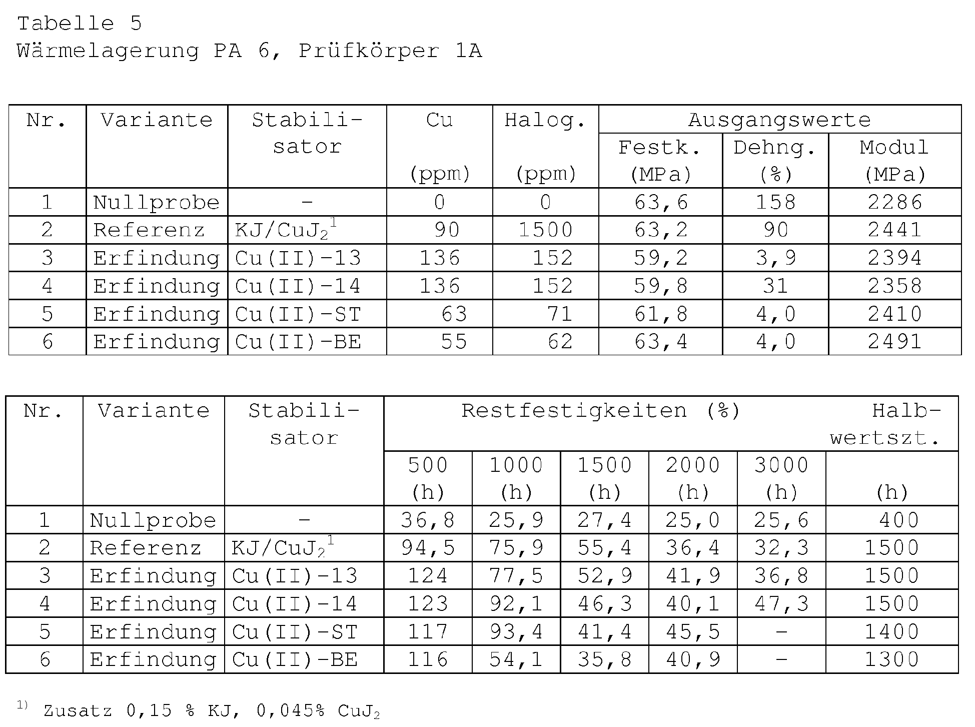

Diese Ergebnisse zeigen, dass erfindungsgemäß mit Kupfersalz-Organoligand-Komplexen stabilisierte Polyamid-6-Zusammensetzungen erhalten werden, die eine deutlich verbesserte thermische und oxidative Stabilität aufweisen und gleichzeitig halogenarm sind. Dies trifft insbesondere für stabilisierte Polyamidzusammensetzungen zu, in denen die Stabilisatoren Cu(II)-13, Cu(II)-14 und Cu(II)-ST enthalten waren (Nr. 3, 4 und 5/Tabelle 5). Der Halogenanteil in diesen erfindungsgemäßen Polyamidzusammensetzungen beträgt nur den zehnten Teil des Halogeneinsatzes der Referenzstabilisierung (Nr. 2/Tabelle 5).

### Antibakterielle Aktivität

Eine weitere erfindungsgemäße Anwendung der Metallsalz-Organoligand-Komplexverbindungen ist die Formulierung von Polyamidzusammensetzungen mit antibakteriellen Materialeigenschaften. Diese Werkstoffeigenschaften werden dadurch erhalten, dass Metallsalz-Organoligand-Komplexverbindungen den Polyamiden zugesetzt werden, in denen Silbersalze zur Komplexierung verwendet wurden.

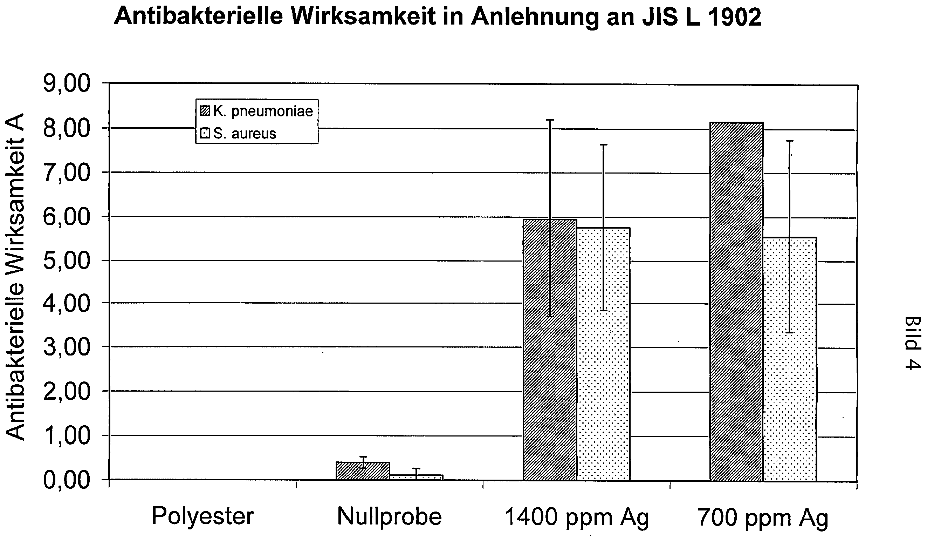

Aus Polyamid 6 und Zusatz verschiedener Mengen des Silbernitrat-Organoligand-Komplexes Ag-13 (Beispiel 3) wurden mittels üblicher Schmelzspinntechnologie textile Filamente ersponnen. Diese Fasern wurden dann parallel zu Vergleichsfasern aus reinem Polyamid 6 und einer Polyestervergleichfaser hinsichtlich antibakterieller Wirksamkeit untersucht. Die Testungen erfolgten in Anlehnung an JIS L 1902 gegen das grampositive Bakterium Staphylococcus aureus und den gramnegativen Keim Klebsiella pneumoniae. Die erhaltenen Prüfwerte zeigen Tabelle 6 und Bild 4:

**Tabelle 6**

| Probe | Metalls-Org. - Komplx. | Zusatz (Masse-%) | Silber (ppm) | Wirksamkeit A | |
|---|---|---|---|---|---|
| | | | | K. pneum. | S. aureus |
| Nullprobe PA6 | - | - | 0 | 0,38 | 0,14 |
| Vergleich PET | - | - | 0 | 0,00 | 0,00 |
| Erfindung A/25 | Ag-13 | 0,25 | 700 | 8,18 | 5,53 |
| Erfindung A/50 | Ag-13 | 0,50 | 1400 | 5,93 | 5,73 |

Im Bild 4 ist antibakterielle Wirksamkeit von erfindungsgemäß modifizierten Polyamidfasern im Vergleich zu einer Nullprobe bzw. zu einer Polyesterfaser dargestellt.

Die Ergebnisse zeigen deutlich, dass durch Zusatz des Silber-Organokomplexes Ag-13 im Vergleich zu den Silber-freien Vergleichsfasern aus Polyamid oder Polyester eine starke antibakterielle Wirksamkeit erreicht wurde.

### Lichtabsorption

Eine Erweiterung der Funktionalisierung von Polyamiden durch Zusatz von erfindungsgemäßen Metallsalz-Organoligand-Komplexverbindungen betrifft die Strahlungsabsorption, die vorteilhafterweise in Polyamidfolien genutzt werden kann, wenn neben Kupfer(II) weitere Metalle wie Cu(I) oder Molybdän zur Komplexierung mit Organoliganden gewählt werden.

Aus Polyamid 6 und Zusatz verschiedener Mengen der Metallsalz-Organoligand-Komplexe Cu(I)-13 (Beispiel 2), Ag-13 (Beispiel 3) oder Mo-13 (Beispiel 4) wurden mittels üblicher Verarbeitungstechnik Folien hergestellt. Diese Folien wurden dann gemeinsam mit einer Vergleichsfolie aus reinem Polyamid 6 hinsichtlich der Strahlungsabsorption untersucht. Durchstrahlt wurde mit einer Strahlung gemäß der Australischneuseeländischen Norm AS/NZ 4399:1996, die für die Ermittlung des UV-Schutzgrades von Flächengebilden zur Anwendung kommt. Die bei den Messungen verwendete Strahlungsart entspricht der des Sonnenspektrums Mittags, 17, januar, Melbourne/Australien. Die erhaltenen Messwerte zeigt Tabelle 7:

**Tabelle 7**

| Probe | Metalls-Org. - Komplx. | Foliedicke (µm) | Zusatz %) (Ma-%) | Metall (ppm) | Absorption bei (nm) | Transmis sion¹⁾ (%) |
|---|---|---|---|---|---|---|
| Nullprobe PA6 | - | 80 | - | 0 | keine | 90 |
| Erfindung Cu/1 | Cu(I)-13 | 80 | - | 182 (CuI) | 250-300 | 40-80 |
| Erfindung A13 | Ag-13 | 80 | 0,1 | 280 (Ag) | 415 | 40 |
| Erfindung Mo13 | Mo-13 | 80 | 0,1 | 630 (Mo) | 300-350 | 75 |

| | | | | | | |
|---|---|---|---|---|---|---|
| ¹⁾ bei Absorptionsminimum | | | | | | |

Die Ergebnisse zeigen, dass in Polyamidformmassen, die vorteilhafterweise zu Folien verarbeitet werden können, gezielt mit Strahlungsabsorbierenden Eigenschaften durch Zusatz erfindungsgemäßer Metallsalz-Organoligand-Komplexverbindungen versehen werden können. Die Folien sind gleichzeitig völlig transparent.

## Patentansprüche

1. Polyamidzusammensetzung mit erhöhter Wärmestabilität und/oder funktionellen Eigenschaften, **dadurch gekennzeichnet, dass** sie zur Stabilisierung und/oder Funktionalisierung mindestens eine stabilisierende und/oder funktionalisierende Metallsalz-Organoligand-Komplexverbindung als Polymeradditiv enthält, wobei der Organoligand ein 2-Oxazolinderivat ist und das Metallsalz ein Kupfer(I)- oder Kupfer(II)-acetat oder ein Zink(II)-, Zinn(II)-, Cobalt- Molybdän-, Titan-, Silber(I)-, halogenid, nitrat, phosphat oder acetat ist.

2. Polyamidzusammensetzung nach Anspruch 1, **dadurch gekennzeichnet, dass** das 2-Oxazolinderivat aus einer aliphatischen oder aromatischen Carbonsäure oder Dicarbonsäure erhältlich ist.

3. Polyamidzusammensetzung nach Anspruch 2, **dadurch gekennzeichnet, dass** die aliphatische oder aromatische Carbonsäure oder Dicarbonsäure Stearinsäure, Behensäure, Adipinsäure, Palmitinsäure, Oxalsäure, Isophthalsäure, Terephthalsäure, 2-Bromterephthal-säure ist.

4. Polyamidzusammensetzung nach Anspruch 1, **dadurch gekennzeichnet, dass** sie antibakteriell funktionalisiert ist oder licht- oder energieabsorbierende Eigenschaften aufweist.

5. Polyamidzusammensetzung nach Anspruch 1, **dadurch gekennzeichnet, dass** die Metallsalz-Organoligand-Komplexverbindung eine stöchiometrische Zusammensetzung mit einem molaren Verhältnis von Organoligand zu Metallsalz-Kation von 2:1, 1:1 oder 1:2 mol/mol aufweist.

6. Polyamidzusammensetzung nach Anspruch 1 oder 4, **dadurch gekennzeichnet, dass** die Metallsalz-Organoligand-Komplexverbindung
a) ein Komplex aus Silbernitrat und 2,2'-(Phenylen-1,3-diyl)-bis-(4,5-dihydro-oxazol) im molaren Verhältnis 1 : 1, entsprechend der Formel 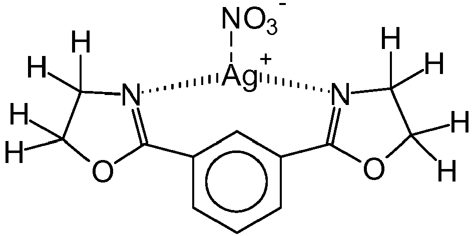 Nitrate-[2,2'-*meta*-phenylen-bis-(4,5-dihydro-oxazol)]-argentat;
b) ein Komplex aus Silbernitrat und 2-heneicosyl-4,5-dihydro-oxazol im molaren Verhältnis 1 : 2 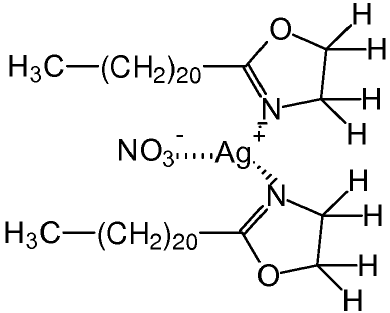 Nitrato-bis-(2-heneicosyl-4,5-dihydro-oxazol)-argentat;
c) ein Komplex aus Kupfer(I)chlorid und 2,2'-*para*-Phenylen-bis-(4,5-dihydro-oxazol) Chloro-[2,2'-*para*-phenylen-bis-(4,5-dihydro-oxazol)]-cuprat oder
d) ein Komplex aus Kupfer(II)chlorid und 2,2'-*para*-Phenylen-bis-(4,5-dihydro-oxazol) Dichloro-[2,2'-para-phenylen-bis-(4,5-dihydro-oxazol)]-cuprat ist.

7. Verfahren zur Herstellung einer Polyamidzusammensetzung mit erhöhter Wärmestabilität und funktionellen Eigenschaften nach Anspruch 1, **dadurch gekennzeichnet, dass** mindestens ein Polyamid und eine Metallsalz-Organoligand-Komplexverbindung nach Anspruch 1 vermischt werden.

## Claims

1. Polyamide composition with enhanced thermal stability and/or functional properties, **characterized in that** for stabilization and/or functionalization it comprises at least one stabilizing and/or functionalizing metal salt-organoligand complex compound as polymer additive, the organoligand being a 2-oxazoline derivative and the metal salt being a copper(I) or copper(II) acetate or a zinc(II), tin(II), cobalt, molybdenum, titanium or silver(I) halide, nitrate, phosphate or acetate.

2. Polyamide composition according to Claim 1, **characterized in that** the 2-oxazoline derivative is obtainable from an aliphatic or aromatic carboxylic acid or dicarboxylic acid.

3. Polyamide composition according to Claim 2, **characterized in that** the aliphatic or aromatic carboxylic acid or dicarboxylic acid is stearic acid, behenic acid, adipic acid, palmitic acid, oxalic acid, isophthalic acid, terephthalic acid or 2-bromoterephthalic acid.

4. Polyamide composition according to Claim 1, **characterized in that** it is antibacterially functionalized or has light-absorbing or energy absorbing properties.

5. Polyamide composition according to Claim 1, **characterized in that** the metal salt-organoligand complex compound has a stoichiometric composition with a molar ratio of organoligand to metal salt cation of 2:1, 1:1 or 1:2 mol/mol.

6. Polyamide composition according to Claim 1 or 4, **characterized in that** the metal salt-organoligand complex compound is
a) a complex of silver nitrate and 2,2'-(phenylene-1,3-diyl)bis(4,5-dihydrooxazole) in a molar ratio of 1:1, conforming to the formula 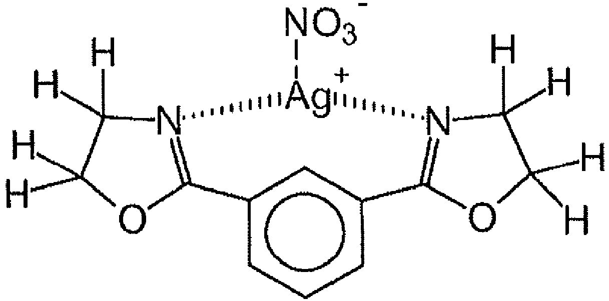 nitrato[2,2'-meta-phenylenebis (4,5-dihydrooxazole)] argentate;
b) a complex of silver nitrate and 2-heneicosyl-4,5-dihydrooxazole in a molar ratio of 1:2 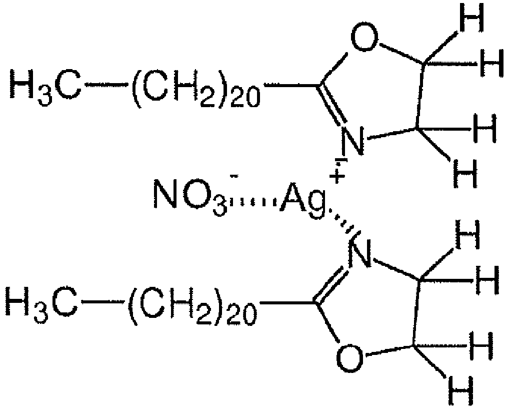 nitratobis(2-heneicosyl-4,5-dihydrooxazole) argentate;
c) a complex of copper(I) chloride and 2,2'-*para*-phenylenebis(4,5-dihydrooxazole) chloro[2,2'-*para*-phenylenebis(4,5-dihydrooxazole)] cuprate;
or
d) a complex of copper(II) chloride and 2,2'*-para-*phenylenebis(4,5-dihydrooxazole) dichloro[2,2'-*para*-phenylenebis(4,5-dihydrooxazole)] cuprate.

7. Method for producing a polyamide composition having enhanced thermal stability and functional properties according to Claim 1, **characterized in that** at least one polyamide and a metal salt-organoligand complex compound according to Claim 1 are mixed.

## Revendications

1. Composition de polyamide à stabilité thermique et/ou propriétés fonctionnelles augmentée(s), **caractérisée en ce qu'**elle contient au moins un composé complexe sel métallique-ligand organique stabilisant et/ou fonctionnalisant sous forme d'additif polymère en vue d'une stabilisation et/ou d'une fonctionnalisation, dans lequel le ligand organique est un dérivé de 2-oxazoline et le sel métallique est un acétate de cuivre (I) ou de cuivre (II) ou un halogénure, nitrate, phosphate ou acétate de zinc (II), d'étain (II), de cobalt, de molybdène, de titane ou d'argent (I).

2. Composition de polyamide selon la revendication 1, **caractérisée en ce que** le dérivé de 2-oxazoline peut être obtenu à partir d'un acide carboxylique, ou d'un acide dicarboxylique, aliphatique ou aromatique.

3. Composition de polyamide selon la revendication 2, **caractérisée en ce que** l'acide carboxylique ou l'acide dicarboxylique aliphatique ou aromatique est de l'acide stéarique, de l'acide béhénique, de l'acide adipique, de l'acide palmitique, de l'acide oxalique, de l'acide isophtalique, de l'acide téréphtalique ou de l'acide 2-bromotéréphtalique.

4. Composition de polyamide selon la revendication 1, **caractérisée en ce qu'**elle est fonctionnalisée de manière antibactérienne ou présente des propriétés d'absorption de lumière ou d'énergie.

5. Composition de polyamide selon la revendication 1, **caractérisée en ce que** le composé complexe sel métallique-ligand organique présente une composition stœchiométrique dont le rapport molaire du ligand organique sur le cation de sel métallique est de 2:1, 1:1 ou 1:2 mol/mol.

6. Composition de polyamide selon la revendication 1 ou 4, **caractérisée en ce que** le composé complexe sel métallique-ligand organique est
a) un complexe à base de nitrate d'argent et de 2,2'-(phénylène-1,3-diyl)-bis-(4,5-dihydro-oxazole) en un rapport molaire de 1:1, correspondant à la formule 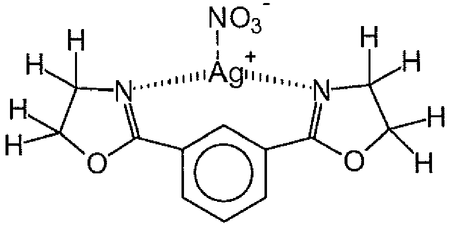 nitrato-[2,2'-*méta*-phénylène-bis-(4,5-dihydro-oxazote)]-argentate ;
b) un complexe à base de nitrate d'argent et de 2-hénéicosyl-4,5-dihydrooxazole en un rapport molaire de 1:2 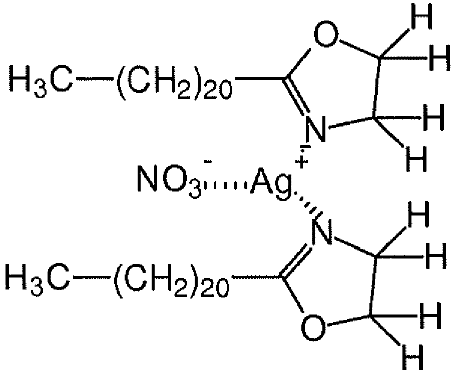 nitrato-bis-(2-hénéicosyl-4,5-dihydro-oxazole)-argentate ;
c) un complexe à base de chlorure de cuivre (I) et de 2,2'-*para*-phénylène-bis-(4,5-dihydro-oxazole) chloro-[2,2'-*para*-phénylène-bis-(4,5-dihydro-oxazole)]-cuprate
ou
d) un complexe à base de chlorure de cuivre (II) et de 2,2'-*para*-phénylène-bis-(4,5-dihydro-oxazole) dichloro-[2,2'-*para*-phénylène-bis-(4,5-dihydro-oxazole)]-cuprate.

7. Procédé de production d'une composition de polyamide à stabilité thermique et propriétés fonctionnelles augmentées selon la revendication 1, **caractérisé en ce qu'**au moins un polyamide et un composé complexe sel métallique-ligand organique selon la revendication 1 sont mélangés.
